(19) Europäisches Patentamt / European Patent Office / Office européen des brevets

(11) **EP 3 637 670 B1**

(12) **EUROPEAN PATENT SPECIFICATION**

(45) Date of publication and mention
of the grant of the patent:
**09.08.2023  Bulletin 2023/32**

(21) Application number: **18199940.0**

(22) Date of filing: **11.10.2018**

(51) International Patent Classification (IPC):
**H04L 9/00** *(2022.01)*

(52) Cooperative Patent Classification (CPC):
**H04L 9/008**

(54) **METHOD AND SYSTEM FOR EXECUTING A CRYPTOGRAPHY SCHEME**

VERFAHREN UND SYSTEM ZUR AUSFÜHRUNG EINES KRYPTOGRAPHIESCHEMAS

PROCÉDÉ ET SYSTÈME POUR L'EXÉCUTION D'UN SCHÉMA DE CRYPTOGRAPHIE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**15.04.2020  Bulletin 2020/16**

(73) Proprietor: **QuBalt GmbH**
**24534 Neumünster (DE)**

(72) Inventor: **HARDER, Wulf**
**24534 Neumünster (DE)**

(74) Representative: **Horn Kleimann Waitzhofer**
**Patentanwälte PartG mbB**
**Ganghoferstraße 29a**
**80339 München (DE)**

(56) References cited:
**WO-A2-2015/121619      US-A1- 2011 110 525**
**US-A1- 2016 254 912      US-B1- 8 515 058**

- **LÉO DUCAS ET AL: "FHEW: Bootstrapping
  Homomorphic Encryption in less than a second",
  INTERNATIONAL ASSOCIATION FOR
  CRYPTOLOGIC RESEARCH,, vol.
  20150302:165340, 2 March 2015 (2015-03-02),
  pages 1-18, XP061017944, [retrieved on
  2015-03-02]**
- **BELLARE ET AL: "The One-More-RSA-Inversion
  Problems and the Security of Chaum's Blind
  Signature Scheme", JOURNAL OF
  CRYPTOLOGY, SPRINGER, NEW YORK, NY, US,
  vol. 16, no. 3, 1 June 2003 (2003-06-01), pages
  185-215, XP037087840, ISSN: 0933-2790, DOI:
  10.1007/S00145-002-0120-1**

## Description

FIELD OF THE INVENTION

The present invention relates to a method, to a computer program and to a system for executing a cryptography scheme with a computing entity and a trusted entity. In particular, the cryptography scheme is a fully homomorphic encryption scheme or a white-box cryptography scheme.

BACKGROUND

When data are processed in insecure or hostile environments, an adversary may intercept confidential data. In order to prevent such interceptions, the owner of such confidential or secret data may encrypt such data and let them be processed in encrypted form. Such methods for processing encrypted data without decrypting them during processing are called fully homomorphic encryption and white-box cryptography. In a white-box cryptography method a key of an encryption algorithm constitutes secret data.

The existing fully homomorphic encryption schemes use unproven computational hardness assumptions, for instance [1,2]. Furthermore, it is unclear, which cryptographical methods that are today assumed to be post-quantum will still be post-quantum in the future, since the development of quantum-algorithms progresses, see [4,5,6] building on basic homomorphic NAND gates.

Another disadvantage of these methods is that they are impractical, because their computation time and ciphertext size are too large.

The existing white-box cryptography schemes are more practical than fully homomorphic encryption schemes, but they also use unproven computational hardness assumptions, for instance the decomposition problem of large finite automata. However, there are a couple of very generic and efficient attacks on white-box cryptography schemes. Updates of the schemes were able to prevent the known attacks, but there is still a risk for new attacks. An introduction to white-box cryptography can be found in [3].

Accordingly, it is an object of the present invention to improve the execution of a cryptography scheme with a computing entity and a trusted entity.

BRIEF SUMMARY OF THE INVENTION

The invention is defined by the appended independent claims.

The trusted entity may be a client in a computer network, a mobile device, a smart card, a secure chip or a processor. The computing entity may be a server in a computer network or a computer.

In particular, the trusted entity has a slower processing speed than the computing entity, but has a higher level of security. Instead, the computing entity has a lower level of security compared to the trusted entity, but has a higher computing speed.

Both, the trusted entity and the computing entity may be constituted by more than one component, e.g. a computer network or a set of processors. Each of the components may compute a part of the cryptographic scheme.

A transformed function $T$ may be implemented as combinational circuit or as computer program.

In a further embodiment, parts of the encryption key $k_e$, being generated for encrypting parts of the plaintext $pt_i$, and/or parts of the decryption key $k_d$, being generated for decrypting parts of the output ciphertext $ct_o$, are transmitted to the computing entity and parts of the plaintext $pt_i$ are encrypted by the computing entity by means of the transmitted parts of the encryption key $k_e$ and/or parts of the output ciphertext $ct_o$ are decrypted to the output plaintext $pt_o$ by the computing entity by means of the transmitted parts of the decryption key $k_d$.

If the computing entity is able to encrypt parts of the plaintext $pt_i$ and to decrypt parts of the output ciphertext $ct_o$, then a white-box cryptography method can be implemented and executed at the computing entity. This is not possible with prior art fully homomorphic encryption schemes, because they use one key or a keypair for all input and output data.

In a further embodiment, redundancy is added to the input ciphertext $ct_i$, and operations of the transformed function $T$ are adapted in order to process the input ciphertext $ct_i$ with the redundancy.

BRIEF DESCRIPTION OF THE DRAWINGS

Fig. 1 shows an embodiment of a sequence of method steps for executing a cryptography scheme with a computing entity and a trusted entity;

Fig. 2 shows an embodiment of a system for executing a cryptography scheme with a computing entity and a trusted entity;

Fig. 3 shows an embodiment of a transformed function used by the method of Fig. 1 and by the system of Fig. 2;

Fig. 4 shows an example of a ciphertext tuple;

Fig. 5 shows an example of a function $P$ not covered by the claims;

Figs. 6-10 show examples not covered by the claims for functions and their corresponding values;

Fig. 11 shows an example not covered by the claims of a ciphertext tuple; and

Figs. 12-15 show examples not covered by the claims for functions and their corresponding values for the ciphertext tuple of Fig. 11.

Similar or functionally similar elements in the Figures have been allocated the same reference signs if not otherwise indicated.

DETAILED DESCRIPTION OF THE EMBODIMENTS

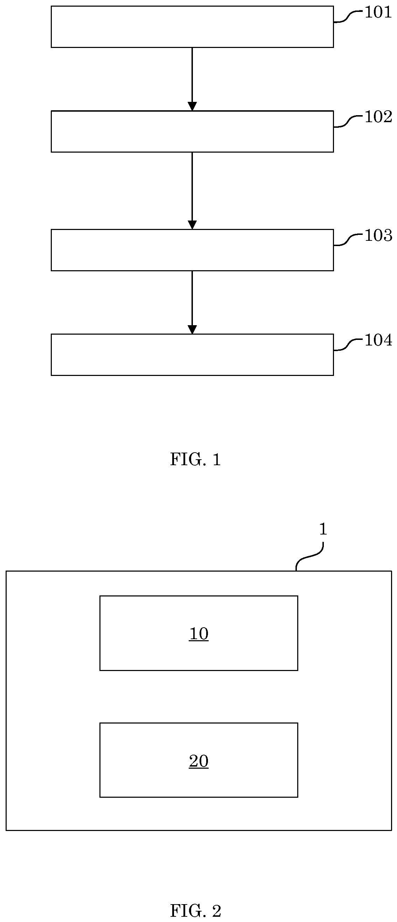

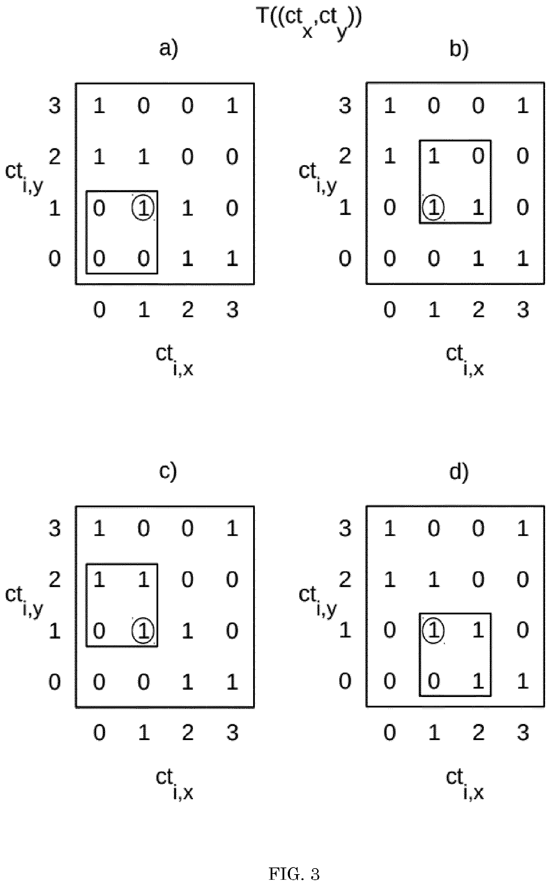

In Fig. 1, an embodiment of a sequence of method steps for executing a cryptography scheme with a computing entity 10 and a trusted entity 20 is depicted. Moreover, Fig. 2 shows an embodiment of a system 1 for executing a cryptography scheme with such a computing entity 10 and such a trusted entity 20. The system 1 of Fig. 2 is adapted to execute the method steps of Fig. 1. Further, Fig. 3 illustrates an embodiment of a transformed function $T$ used by the method of Fig. 1 and by the system of Fig. 2.

In the following, Figs. 1 to 3 are discussed in conjunction, also referring to the further Figures of the present patent application.

The method of Fig. 1 has the following steps 101 - 104:

In step 101, a function $P$ is transformed to a transformed function $T$ using a transformation $P \rightarrow T$ by the trusted entity 20. The function $P$ is adapted to calculate an output plaintext $pt_o = P(pt_i)$ from an input plaintext $pt_i$ of $n$ bits, wherein the transformed function $T$ is adapted to calculate an output ciphertext $ct_o = T(ct_i)$ from an input ciphertext $ct_i$, wherein the transformation $P \rightarrow T$ includes calculating an encryption key $k_e = w_e(P, t)$ for encrypting the input plaintext $pt_i$ using a function $w_e$, and calculating a decryption key $k_d = w_d(P, t)$ for decrypting the output ciphertext $ct_o$ using a function $w_d$, wherein the function $P$ and a secret parameter set $t$ are used to calculate the encryption key $k_e$ and the decryption key $k_d$, and for all ciphertext tuples $(ct'_i, ct'_o)$ with $ct'_o = T(ct'_i)$ and for v plaintext tuples $(pt'_i, pt'_o)$ with $(2 \leq v \leq 2^n)$ $\wedge$ $(pt'_o = P(pt'_i))$ exists a $t'$ so that

$$(k'_e = w_e(P, t')) \wedge (k'_d = w_d(P, t')) \wedge$$

$$(ct'_i = enc(pt'_i, k'_e)) \wedge (pt'_o = dec(ct'_o, k'_d)) \wedge$$

$$(((ct'_i, ct'_o) = (ct_i, ct_o)) \Leftrightarrow (t' = t)),$$

wherein the function $enc$ encrypts the input plaintext $pt'_i$ with the encryption key $k'_e$, and the function $dec$ decrypts the output ciphertext $ct'_o$ with the decryption key $k'_d$.

In step 102, at the trusted entity 20 or at the trusted entity 20 and the computing entity 10, the input plaintext $pt_i$ is encrypted to the input ciphertext $ct_i$ using the encryption key $k_e$.

In step 103, at least a part of the input ciphertext $ct_i$ being encrypted by the trusted entity 20 is transmitted from the trusted entity 20 to the computing entity 10.

In step 104, the input ciphertext $ct_i$ is input into the transformed function $T$ at the computing entity 10 for calculating the output ciphertext $ct_o$.

In this regard, Fig. 3 including diagrams 3a, 3b, 3c and 3d depicts an embodiment of a transformed function

$$T\left((ct_{i,x}, ct_{i,y})\right) = ct_o = \left\lfloor \frac{1}{2}\left(ct_{i,x} + ct_{i,y}\right) \right\rfloor \mod 2$$

(see step 101) which has as input the ciphertext $ct_i = (ct_{i,x}, ct_{i,y})$ and which is a transformation of the boolean function $P((pt_{i,x}, pt_{i,y})) = pt_o = NAND(pt_{i,x}, pt_{i,y})$, which has as input the plaintext $pt_i = (pt_{i,x}, pt_{i,y})$. "$\lfloor x \rfloor$" denotes the floor function, which outputs the greatest integer less than or equal to $x$. There are double brackets in $T((ct_{i,x}, ct_{i,y}))$, because $T$ takes only one argument.

$T$ can be found with a brute force program. The table of $T$ has 16 numbers 0 or 1. The brute force program may go through all $2^{16}$ possible table settings and check if the above-mentioned requirements are fulfilled for some given functions $w_e$, $w_d$, enc, dec.

With the plaintext size $n$ = 2 bits, there are $2^n$ = 4 plaintexts. The plaintext values $pt_{i,y}$, $pt_{i,x}$ and $pt_o$ are 0 for *False* or 1 for *True*. A secret parameter $t = (t_x, t_y)$ determines the position of the inner rectangle in the diagrams a, b, c and d. The assignments of values of t to the diagrams are as follows: a) $t$ = (0,0), b) $t$ = (1,1), c) $t$ = (0,1), d) $t$ = (1,0).

The encryption key $k_e = (k_{e,x}, k_{e,y}) = ((k_{e,x,0}, k_{e,x,1}), (k_{e,y,0}, k_{e,y,1}))$ can be calculated with $k_e = w_e(NAND, t) = (((t_x + ((t_x + t_y) \bmod 2)) \bmod 4, 1 - 2((t_x + t_y) \bmod 2)), ((t_y + ((t_x + t_y) \bmod 2)) \bmod 4, 1 - 2((t_x + t_y) \bmod 2)))$.

The plaintext $pt_i$ can be encrypted with

$$ct_i = enc(pt_i, k_e) =$$

$$\left((k_{e,x,0} + pt_{i,x} \cdot k_{e,x,1}\right) \bmod 4, \left(k_{e,y,0} + pt_{i,y} \cdot k_{e,y,1}\right) \bmod 4).$$

The decryption key $k_d$ can be calculated by means of the components of $k_e$:

$$k_d = \left\lfloor \frac{1}{2}\left(k_{e,x,0} + k_{e,x,1} + k_{e,y,0} + k_{e,y,1}\right)\right\rfloor \bmod 2.$$

Since the encryption key $k_e$ is a function of t, $k_d$ is also a function of t and may be rewritten as $k_d = w_d(NAND, t)$. After $ct_o = T((c_{ti,x}, c_{ti,y}))$ has been calculated, it can be decrypted with

$$pt_o = dec(ct_o, k_d) = (ct_o + k_d) \bmod 2.$$

It can be shown that for all ciphertext tuples $(ct'_i, ct'_o)$ with $ct'_o = T(ct'_i)$ and for all $2^n$ plaintext tuples $(pt'_i, pt'_o)$ with $pt'_o = P(pt'_i)$ exists a $t'$ so that

$$(k'_e = w_e(P, t')) \wedge (k'_d = w_d(P, t')) \wedge$$

$$(ct'_i = enc(pt'_i, k'_e)) \wedge (pt'_o = dec(ct'_o, k'_d)) \wedge$$

$$(((ct'_i, ct'_o) = (ct_i, ct_o)) \Leftrightarrow (t' = t)).$$

The prime symbol " ' " at the variables denotes that the values of the variables are fictive and used only for verifying, if the above-mentioned requirements are fulfilled.

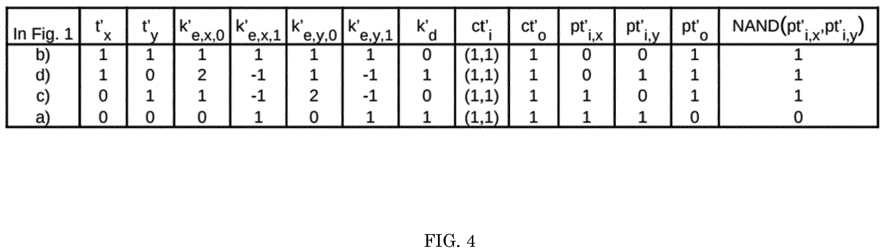

Fig. 4 shows this only for $(ct'_i, ct'_o) = ((1,1),1)$.

The function $T$ as represented in Fig. 1 can be seen as a set of tuples:

$$T = \{(0,0,0), (1,0,0), (2,0,1), (3,0,1),$$
$$(0,1,0), (1,1,1), (2,1,1), (3,1,0),$$
$$(0,2,1), (1,2,1), (2,2,0), (3,2,0),$$
$$(0,3,1), (1,3,0), (2,3,0), (3,3,1)\}.$$

Each tuple contains the input parameter x, the input parameter y and the output value, in this sequence.

The inner rectangles of the four outer rectangles of Fig. 3 show subsets of $T$:

$$S_a = \{(0,0,0), (1,0,0), (0,1,0), (1,1,1)\},$$

$$S_b = \{(1,1,1), (2,1,1), (1,2,1), (2,2,0)\},$$

$$S_c = \{(0,1,0), (1,1,1), (0,2,1), (1,2,1)\},$$

$$S_d = \{(1,0,0), (2,0,1), (1,1,1), (2,1,1)\},$$

with

$$S_a \cap S_b \cap S_c \cap S_d = \{(1,1,1)\}.$$

The output value 1 of this intersection, which has the x-coordinate 1 and the y-coordinate 1 and which is marked with a circle, is present in the inner rectangle of all four diagrams 3a, 3b, 3c and 3d.

Each subset $S_a$, $S_b$, $S_c$, $S_d$ can be used to calculate a non-linear boolean function with two parameters, e.g. $pt_x$ and $pt_y$. In this example, they are used to calculate four *NAND* operations, see Fig. 4. By calculating the function *T*, there are four *NAND* operations with different input plaintexts $pt_x$ and $pt_y$ calculated simultaneously, wherein the plaintexts are encrypted with different encryption keys $k_e$. The choice of one of the subsets $S_a$, $S_b$, $S_c$, $S_d$ is a secret of the trusted entity. An adversary does not have any information about which one of the subsets $S_a$, $S_b$, $S_c$, $S_d$ the trusted entity chose, when the function *T* is executed with the input values of one element of the subset, since it is an element of four subsets. The calculation is information-theoretically secure, if the secret is used only one time.

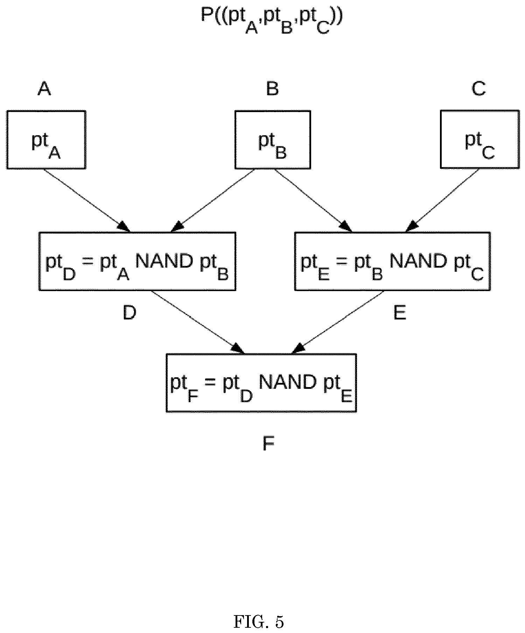

In Fig. 5, an example not covered by the claims of a function $P = (pt_A \ NAND \ pt_B) \ NAND \ (pt_B \ NAND \ pt_C)$ with nodes *A, B, C, D, E, F* and *m* = 3 layers in the boolean network is depicted.

Nodes *X* and *Y*, which deliver values to a node *Z* are called *parent nodes* of *Z* and can be denoted as *X* = *parx(Z)* and *Y* = *pary(Z)*. In Fig. 5, e.g. node *A* is a leaf node and a parent node of node *D*, denoted as *A* = *parx(D)*. Nodes that have no parent nodes, in this example of Fig. 5 nodes *A*, *B* and *C*, are called *leaf nodes.*

While an order of the parameters, denoted by the two functions *parx* and *pary* that both deliver a parent node, is not relevant in the function *P*, it is relevant in functions $h_Z$ described further below. A transformed function $T((ct_A, ct_B, ct_C))$ is constructed in a transformation process. In a first step a $t = (t_A, t_B, t_C)$ is chosen randomly, in this example $t = (0,1,1)$. Then values of the functions

$$f_Z(x, y) = \left(\left\lfloor \frac{1}{2}(x + y + q_Z) \right\rfloor + s_Z\right) mod\ 2^{j_Z}$$

are assigned to the nodes *A*, *B* and *C* for the plaintext value *True*, using

$$t = (0,1,1),\ (p_A, p_B, p_C) = (1,1,1),\ (q_A, q_B, q_C) = (0,0,0),\ (jA, jB, jC) = (3,3,3):$$

$$f_A(t_A, t_A) = \left(\left\lfloor \frac{1}{2}(t_A + t_A + q_A) \right\rfloor\right) mod\ 2^{jA} = 0 \text{ for Node } A,$$

$$f_B(t_B, t_B) = \left(\left\lfloor \frac{1}{2}(t_B + t_B + q_B) \right\rfloor\right) mod\ 2^{jB} = 1 \text{ for Node } B,$$

$$f_C(t_C, t_C) = \left(\left\lfloor \frac{1}{2}(t_C + t_C + q_C) \right\rfloor\right) mod\ 2^{jC} = 1 \text{ for Node } C.$$

The corresponding values for the plaintext value *False* are:

$$f_A(t_A, t_A) + 1 = 1 \text{ for Node } A,$$

$$f_B(t_B, t_B) + 1 = 2 \text{ for Node } B,$$

$$f_C(t_C, t_C) + 1 = 2 \text{ for Node } C.$$

$p_A$, $p_B$, $p_C$, $q_A$, $q_B$ and $q_C$ can be part of the parameter set t and chosen randomly too, but this would increase the complexity of this example therefore $(p_A,p_B,p_C) = (1,1,1)$ and $(q_A,q_B,q_C) = (0,0,0)$ are assumed. $(p_A,p_B,p_C) = (1,1,1)$ implicates $(p_D,p_E,p_F) = (1,1,1)$.

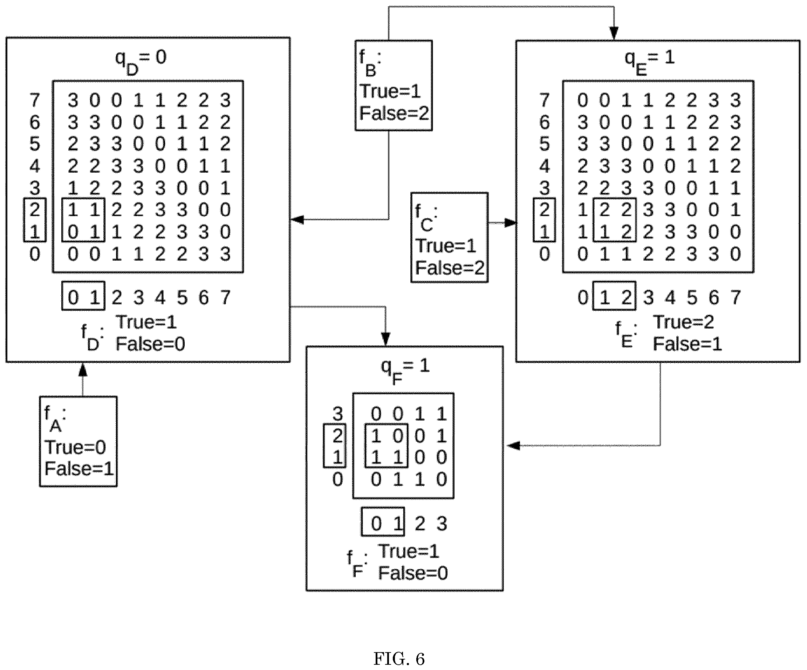

In a next step, the values $q_D$, $q_E$ and $q_F$ are adapted by initialising them either to 0 or 1, so that there is a bijection between the values of the functions $f$ and the values of the corresponding boolean NAND functions of the function $P$ for all nodes and all inputs. If $(p_A,p_B,p_C) = (1,1,1)$ would not be true, then also $p_D$, $p_E$ and $p_F$ would have to be adapted. Fig. 6 shows the functions $f_D$, $f_E$ and $f_F$ and their values $q_D$, $q_E$ and $q_F$. $(q_D,q_E,q_F) = (0,1,1)$. For the given input assignments to the boolean values *False* and *True,* the functions $f_D$, $f_E$ and $f_F$ can be used to compute a *NAND* only if $(q_D,q_E,q_F) = (0,1,1)$.

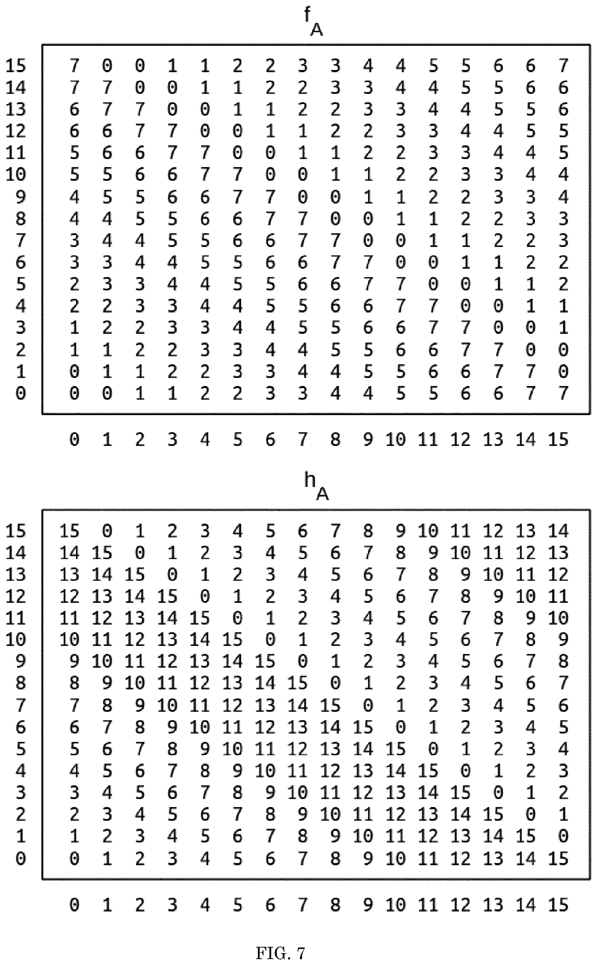

Even though a secret $t$ is chosen, the net of functions $f_Z$ may leak information about the processed data, because the values $q_Z$ are revealed in the functions $f_Z$. The amount of leaking information can be reduced by doubling the size of the codomains of the functions $f_Z$, which is implemented in the functions $h_z$, as shown in Fig. 7, which depicts the functions $f_A$ and $h_A$ of the current example.

The functions $h_Z$ may be used to process the input ciphertext data. The functions $g'_Z$ are used to assign values of the functions $f_Z$ to values of the functions $h_Z$. $d_{Z,y}$ are sometimes not equal to zero, if there are $p_Z$, which are not equal to one, or if there are $q_Z$, which are not equal to zero. In order to get a function $g'_Z$ and a function $h_z$ in the here called

$$h_Z(ct_X, ct_Y) = \left(ct_X + 2^{m-jZ}\left\lfloor\frac{ct_Y}{2^{m-jZ}}\right\rfloor\right) mod\ 2^{m+1}$$

*normal form* of functions $h_D$, $h_E$ and $h_F$ that are faster executable without the parameter $d_{Z,y}$, the parameters $d'_{Z,x}$ and $d'_{Z,y}$ are initialised, which will compensate $d_{Z,y}$. $d_{Z,y}$ is adapted so that it is possible to construct a bijection between the values of the function $h_Z$ with $(d'_{Z,x}, d'_{Z,y}) = (0,0)$ and the values of the function $g_Z$.

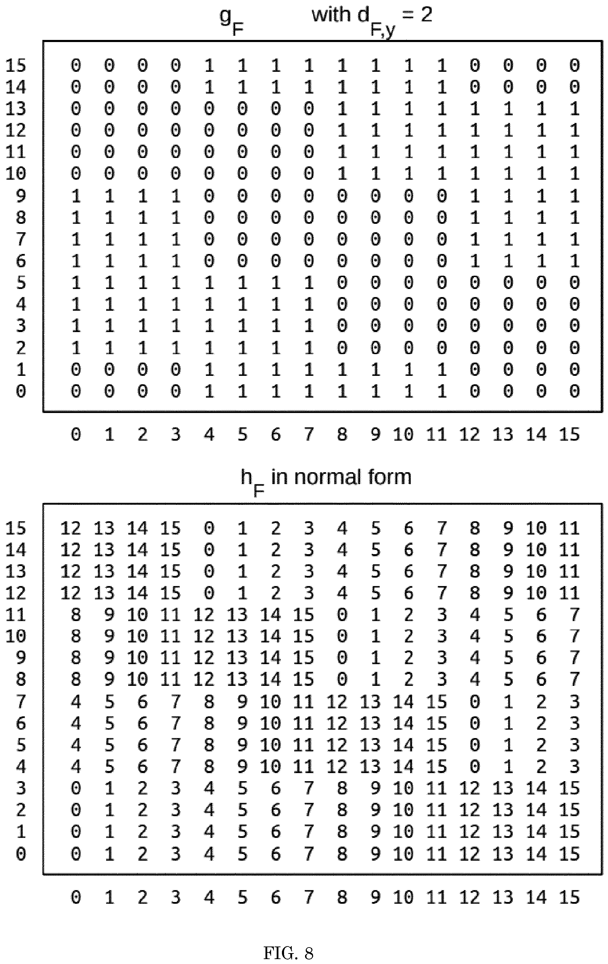

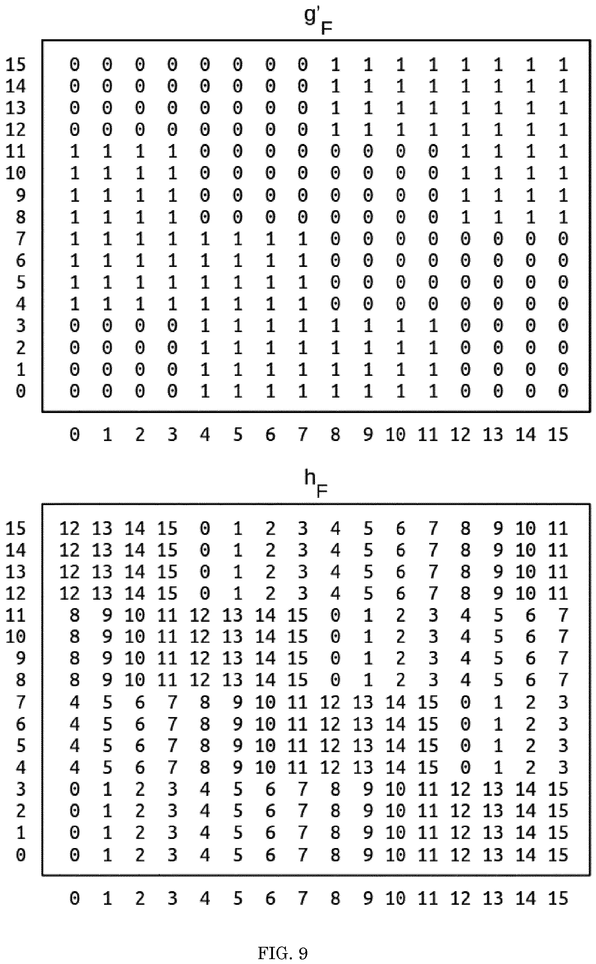

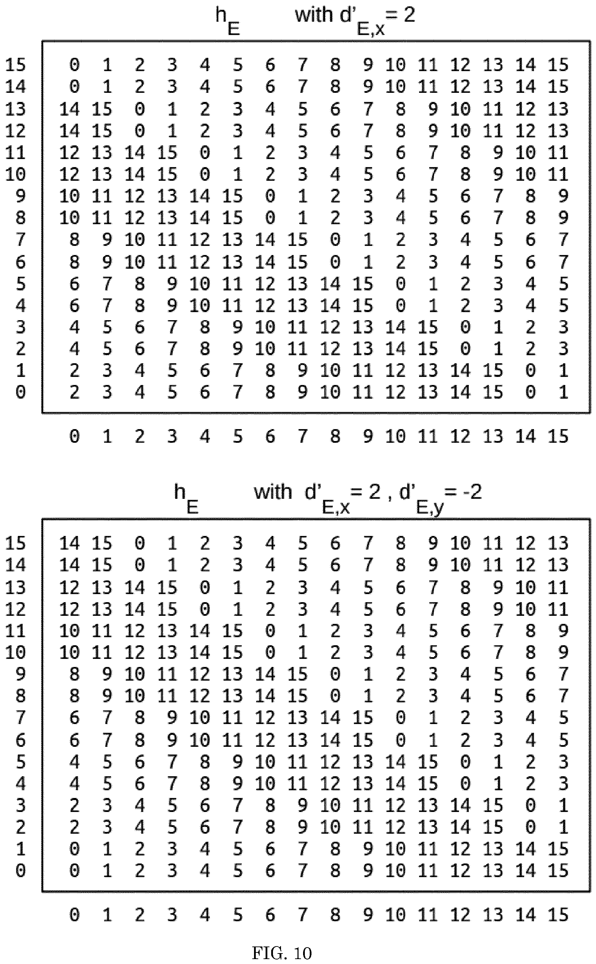

In all Figures, which depict the functions $g$, $g'$ or $h$ of non-leaf nodes Z, the horizontal axis denotes the input received from parx(Z), and the vertical axis denotes the input received from pary(Z). Fig. 8 shows the functions $g_F$ with $d_{F,y} = 2$ and the function $h_F$ in the normal form. In the present case, it is not possible to construct such a bijection. It would be possible, if the lines of the table of $g_F$ would be rotated upwards by two lines (because of the modulus: the upper two lines are moved to the bottom of the table). This is done by setting $d'_{F,y} = -2$ in the function $g'_F$, depicted as the first table of Fig. 9. This rotation has to be done too with the not normalised form of the corresponding function $h_F$, which also uses the parameters $d_{F,y} = 2$ and $d'_{F,y} = -2$. In order to keep the network of functions $h_Z$ working correctly, the change caused by setting $d'_{F,y} = -2$ has to be compensated by setting the parameter $d'_{pary(F),x} = 2$ of the parent node $E$ of node $F$, which delivers the input for $y$ in the functions $f_F(x, y)$ and $g'_F(x, y)$. This disturbs the normal form of $h_E$, because the columns are rotated in horizontal direction to the left, as the first table in Fig. 10 shows. It can be compensated by a rotating the lines upwards by setting $d'_{E,y} = -2$, as shown in the second table of Fig. 10. Again, this may be compensated one layer higher in the network of nodes. In this way all functions $h_Z$ can be normalised layer by layer, moving from the bottom to the top of the network of nodes.

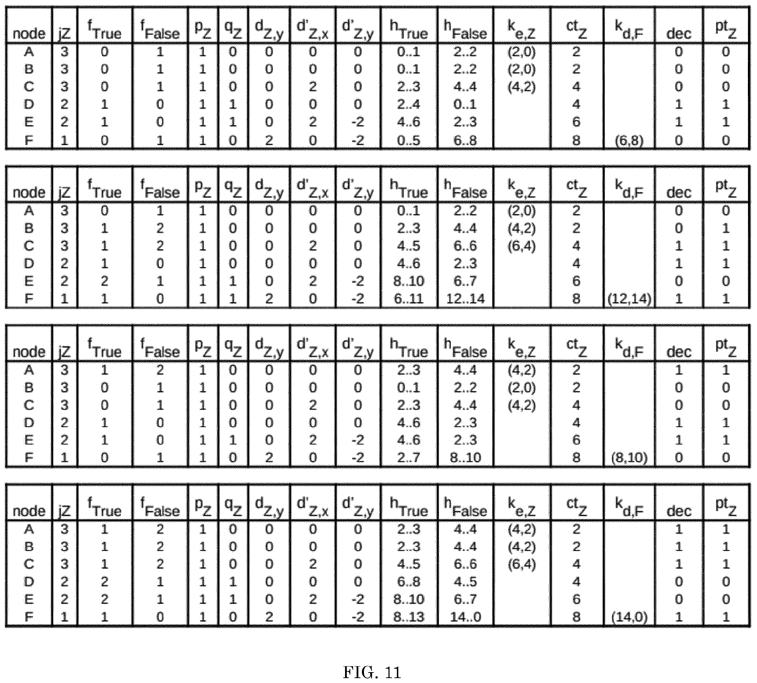

The second table of Fig. 11 shows all parameters for the current example. Using these parameters and the function

$$h_Z(x,y) = \left(x + d'_{Z,x} + 2^{m-jZ}\left\lfloor\frac{y+d_{Z,y}+d'_{Z,y}}{2^{m-jZ}}\right\rfloor\right) mod\ 2^{m+1},$$

one gets

$$T((ct_A, ct_B, ct_C)) = h_F(h_D(ct_A, ct_B), h_E(ct_B, ct_C)),$$

with

$$ct_d = h_D(ct_a, ct_b) = \left(ct_a + 2\left\lfloor\frac{ct_b}{2}\right\rfloor\right) mod\ 16,$$

$$ct_E = h_E(ct_B, ct_C) = \left(ct_B + 2\left\lfloor\frac{ct_C}{2}\right\rfloor\right) mod\ 16,$$

$$ct_F = h_F(ct_D, ct_E) = \left(ct_D + 4\left\lfloor\frac{ct_E}{4}\right\rfloor\right) mod\ 16.$$

The encryption key will be $k_e = (k_{e,A}, k_{e,B}, k_{e,C})$, with,

$$k_{e,A} = ((h_A(t_A, t_A), h_A(t_A, t_A) + 2)),$$

$$k_{e,B} = ((h_B(t_B, t_B), h_B(t_B, t_B) + 2)),$$

$$k_{e,C} = ((h_C(t_C, t_C), h_C(t_C, t_C) + 2)).$$

The encryption function $enc(pt_{i,Z}, k_{e,Z})$ outputs as ciphertext the first component of $k_{e,Z}$ in case $pt_{i,Z} = True$, or it outputs as ciphertext the second component of $k_{e,Z}$ in case $pt_{i,Z} = False$. $h_{True}$ and $h_{False}$ denote the ranges of possible outputs of the functions $h_Z$. The decryption key $k_{d,F}$ is a tuple that denotes the range of possible values of the function $h_F$ of node F, which are assigned to the boolean value *False*. The decryption function $dec(ct_{o,F}, k_{d,F})$ may output as plaintext a *False* or a 0, if $ct_{o,F}$ is in the range of $k_{d,F}$, taking the modulus $2^{m+1}$ into account, otherwise it will output as plaintext a *True* or a 1.

The first, third and fourth table in Fig. 11 show other cases, wherein the processed ciphertext values $ct_Z$ are the same like in the second table. It is possible to see that the plaintext values $pt_Z$ are different in these four tables.

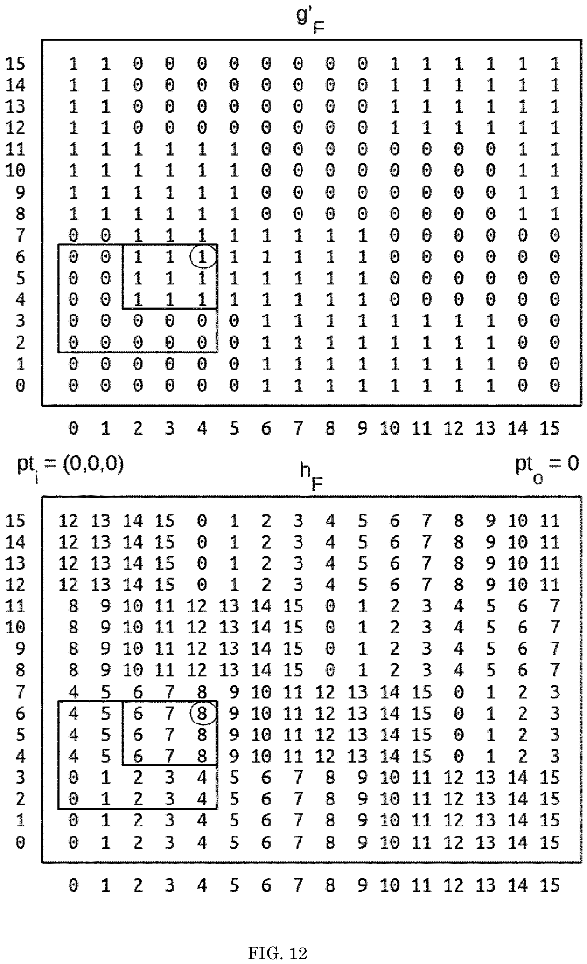

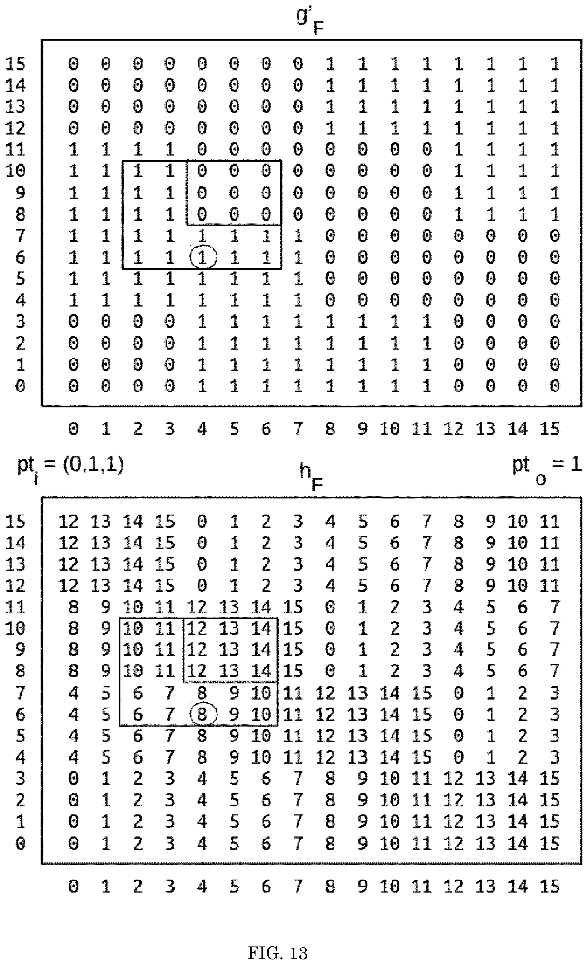

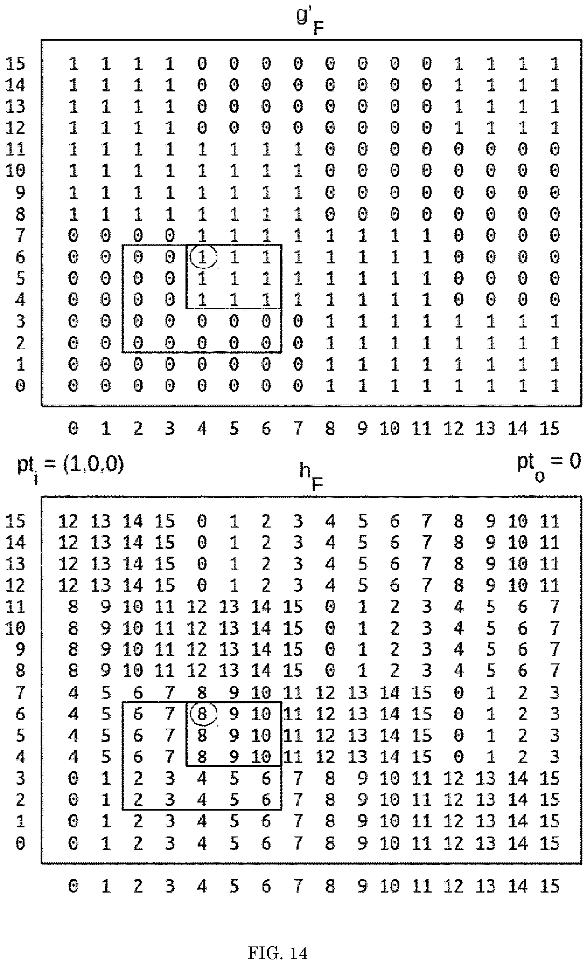

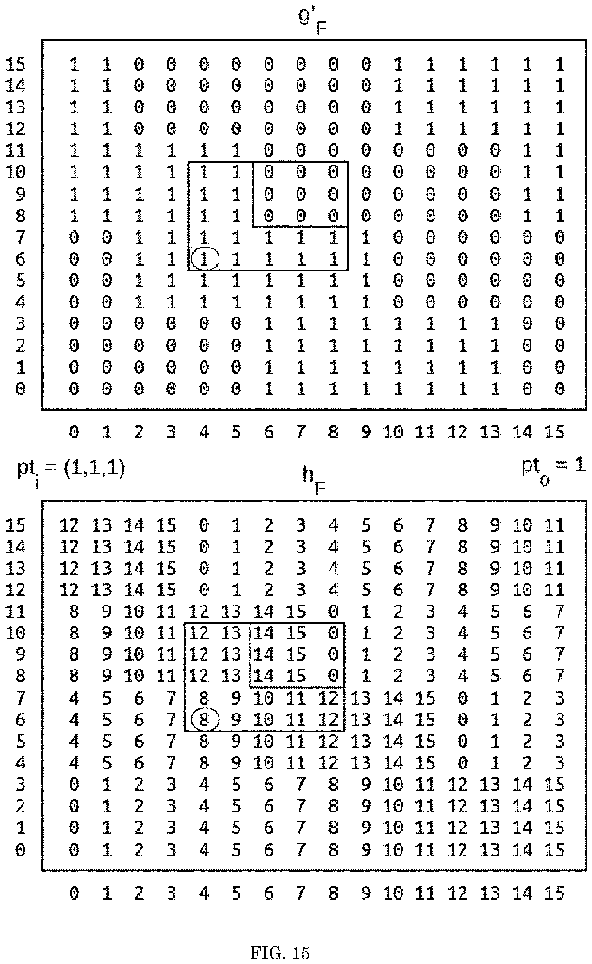

Figs. 12 to 15 show the functions $g'_F$ and $h_F$ of node F for the four different encryption keys $k_e$ and input plaintexts $pt_i$, which are also shown in the four tables of Fig. 11. The smallest rectangle in each table diagram marks the reachable values that are assigned to the plain boolean value *False*. The values in the second smallest rectangle, which are not in the smallest rectangle, are the reachable values that are assigned to the plain boolean value *True*. In the tables of $h_F$ the circle marks the ciphertext output.

MATHEMATICAL OPERATORS AND FUNCTIONS

$\lfloor x \rfloor$      floor function, outputs the greatest integer less than or equal to $x$
*i mod n*      an integer that is the difference of *i* and $k \cdot n$, wherein *k* is the greatest integer such that $k \cdot n \le i$
*a* ∧ *b*      logical conjunction of *a* and *b*
*a* ∨ *b*      logical disjunction of *a* and b
*a* ⇔ *b*      logical biconditional of *a* and *b*
*A* ∩ *B*      intersection of sets *A* and *B*

REFERENCE NUMERALS

1      system
10      computing entity
20      trusted entity
101 - 104      method steps

A      node A

B       node B

C       node C

$ct_{i,x}$      first component of input ciphertext $ct_i$

$ct_{i,y}$      second component of input ciphertext $ct_i$

$ct'_i$     input ciphertext

$ct'_o$     output ciphertext

$ct_Z$      ciphertext of node Z

D       node D

dec     decryption function

$d'_{E,x}$      first normalisation parameter of node E

$d'_{E,y}$      second normalisation parameter of node E

$d_{F,y}$       vertical rotation parameter of function $g_F$ of node F

$d_{Z,y}$       vertical rotation parameter of function $g_Z$ of node Z

$d'_{Z,x}$      first normalisation parameter of node Z

$d'_{Z,y}$      second normalisation parameter of node Z

E       node E

F       node F

$f_{True}$      values of function f assigned to boolean value True

$f_{False}$     values of function f assigned to boolean value False

$f_A$       function f of node A

$f_B$       function f of node B

$f_C$       function f of node C

$f_D$       function f of node D

$f_E$       function f of node E

$f_F$       function f of node F

$g_F$       function g of node F

$g'_F$      function g' of node F

hTrue       values of function h assigned to boolean value True

$h_{False}$     values of function h assigned to boolean value False

$h_A$       function h of node A

$h_E$       function h of node E

$h_F$       function h of node F

jZ      layer of node Z

$k_{d,F}$       decryption key of node F

$k'_d$      decryption key

$k'_{e,x,0}$        component of encryption key

$k'_{e,x,1}$        component of encryption key

$k'_{e,y,0}$        component of encryption key

$k'_{e,y,1}$        component of encryption key

$k'_{e,Z}$      encryption key of node Z

P       function working on plaintexts

$pt_A$      plaintext of node A

$pt_B$      plaintext of node B

$pt_C$      plaintext of node C

$pt_D$      plaintext of node D

$pt_E$      plaintext of node E

$pt_F$      plaintext of node F

$pt_i$      input plaintext

$pt_o$      output plaintext

$pt_Z$     plaintext of node Z
$p_Z$     parameter of function f of node Z
$pt'_{i,x}$     first component of input plaintext
$pt'_{i,y}$     second component of input plaintext
$pt'_o$     output plaintext

$q_D$     parameter of function f of node D
$q_E$     parameter of function f of node E
$q_F$     parameter of function f of node F
$q_Z$     parameter of function f of node Z

$T$     transformed function
$t'_x$     first component of secret parameter set t
$t'_y$     second component of secret parameter set t

REFERENCES

[1] Frederik Armknecht et al., A Guide to Fully Homomorphic Encryption, https://eprint.iacr.org/2015/1192.pdf, 2015

[2] Paulo Martins et al., A Survey on Fully Homomorphic Encryption: An Engineering Perspective, ACM Computing Surveys, Volume 50 Issue 6, Article No. 83, January 2018

[3] Brecht Wyseur, White-Box Cryptography, PhD Thesis, Katholieke Universiteit Leuven, March 2009

[4] LÉO DUCAS ET AL: "FHEW: Bootstrapping Homomorphic Encryption in less than a second", INTERNATIONAL ASSOCIATION FOR CRYPTOLOGIC RESEARCH, vol. 20150302:165340, 2 March 2015, pages 1-18

[5] US 2011/110525 A1 (GENTRY CRAIG B [US]) 12 May 2011

[6] US 8 515 058 B1 (GENTRY CRAIG B [US]) 20 August 2013

**Claims**

1. A method for executing a cryptography scheme with a computing entity (10) and a trusted entity (20), the method comprising:

transforming (101), at the trusted entity (20), a function $P$ using a transformation $P \rightarrow T$ to a transformed function $T,$ wherein the function P is NAND, wherein the function $P$ is adapted to calculate an output plaintext $pt_o = P(pt_i)$ from an input plaintext $pt_i$ of $n$ bits, n=2, wherein the transformed function $T$ is adapted to calculate an output ciphertext

$$ct_o = (ct_{o,x}, ct_{o,y}) = T(ct_i) = T(ct_{i,x}, ct_{i,y}) = \left\lfloor \frac{1}{2}(ct_{i,x}, +ct_{i,y}) \right\rfloor mod\ 2$$

from an input ciphertext $ct_i$, wherein the transformation $P \rightarrow T$ includes calculating an encryption key $k_e$ with $k_e$ = $((k_{e,x,0}, k_{e,x,1}), (k_{e,y,0}, k_{e,y,1}))$ = $(((t_x + ((t_x + t_y)\ mod\ 2))\ mod\ 4, 1 - 2((t_x + t_y)\ mod\ 2)), ((t_y + ((t_x + t_y)\ mod\ 2))\ mod\ 4, 1 - 2((t_x + t_y)\ mod\ 2)))$, $k_e$ being used for encrypting the input plaintext $pt_i$, $ct_i = enc(pt_i, k_e) = ((k_{e,x,0} + pt_{i,x}.k_{e,x,1})\ mod\ 4, (k_{e,y,0} + pt_{i,y}.k_{e,y,1})\ mod\ 4)$, and calculating a decryption key $k_d$ with

$$k_d = \left\lfloor \frac{1}{2}(k_{e,x,0} + k_{e,x,1} + k_{e,y,0} + k_{e,y,1}) \right\rfloor mod\ 2$$

, $k_d$ being used for decrypting the output ciphertext $ct_o$, $pt_o = dec(ct_o, k_d) = (ct_o + k_d)\ mod\ 2$, wherein the function P and a secret parameter set $t = (t_x, t_y)$ are used to calculate the encryption key $k_e$ and the decryption key $k_d$

encrypting (102), at the trusted entity (20) or at the trusted entity (20) and the computing entity (10), the input plaintext $pt_i$ to the input ciphertext $ct_i$ using the encryption key $k_e$,

transmitting (103) at least a part of the input ciphertext $ct_i$ being encrypted by the trusted entity (20) from the trusted entity (20) to the computing entity (10), and

inputting (104) the input ciphertext $ct_i$ into the transformed function $T$ at the computing entity (10) for calculating the output ciphertext $ct_o$,

wherein the encryption key $k_e$ and the decryption key $k_d$ are used only one time.

2. The method of claim 1,
wherein the input plaintext $pt_i$ is encrypted by the trusted entity (20) to the input ciphertext $ct_i$ by means of the encryption key $k_e$, and the input ciphertext $ct_i$ is transmitted to the computing entity (10) and/or the output ciphertext $ct_o$ is transmitted to the trusted entity (20) and decrypted to the output plaintext $pt_o$ by means of the decryption key $k_d$.

3. The method of one of claims 1 to 2,
wherein parts of the encryption key $k_e$, being generated for encrypting parts of the plaintext $pt_i$, and/or parts of the decryption key $k_d$, being generated for decrypting parts of the output ciphertext $ct_o$, are transmitted to the computing entity (10) and parts of the plaintext $pt_i$ are encrypted by the computing entity (10) by means of the transmitted parts of the encryption key $k_e$ and/or parts of the output ciphertext $ct_o$ are decrypted to the output plaintext $pt_o$ by the computing entity (10) by means of the transmitted parts of the decryption key $k_d$.

4. The method of one of claims 1 to 3,
wherein redundancy is added to the input ciphertext $ct_i$, and operations of the transformed function $T$ are adapted in order to process the input ciphertext $ct_i$ with the redundancy.

5. A computer program comprising a program code for executing the method of one of claims 1 to 4 for executing a cryptography scheme with a computing entity (10) and a trusted entity (20), when run on at least one computer.

6. A system for executing a cryptography scheme with a computing entity (10) and a trusted entity (20), wherein

the trusted entity (20) includes a transforming entity which is configured to transform a function $P$ using a transformation $P \rightarrow T$ to a transformed function $T$, wherein the function $P$ is NAND, wherein the function $P$ is adapted to calculate an output plaintext $pt_o = P(pt_i)$ from an input plaintext $pt_i$ of $n$ bits, n=2, wherein the transformed function $T$ is adapted to calculate an output ciphertext

$$ct_o = \left(ct_{o,x}, ct_{o,y}\right) = T(ct_i) = T\left(ct_{i,x}, ct_{i,y}\right) = \left\lfloor \frac{1}{2}\left(ct_{i,x}, +ct_{i,y}\right)\right\rfloor mod\ 2$$

from an input ciphertext $ct_i$, wherein the transformation $P \rightarrow T$ includes calculating an encryption key $k_e$

$$\text{with } k_e = \left(\left(k_{e,x,0}, k_{e,x,1}\right), \left(k_{e,y,0}, k_{e,y,1}\right)\right) =$$

$$\left(\left(\left(t_x + \left(\left(t_x + t_y\right) mod\ 2\right)\right) mod\ 4, 1 - 2\left(\left(t_x + t_y\right) mod\ 2\right)\right),$$

$$\left(\left(t_y + \left(\left(t_x + t_y\right) mod\ 2\right)\right) mod\ 4, 1 - 2\left(\left(t_x + t_y\right) mod\ 2\right)\right)\right),$$

$k_e$ being used for encrypting the input plaintext $pt_i$, $ct_i = enc(pt_i, k_e) = ((k_{e,x,0} + pt_{i,x}.k_{e,x,1})\ mod\ 4, (k_{e,y,0} + pt_{i,y}.k_{e,y,1})\ mod\ 4)$, and calculating a decryption key $k_d$, with

$$k_d = \left\lfloor \frac{1}{2}\left(k_{e,x,0} + k_{e,x,1} + k_{e,y,0} + k_{e,y,1}\right)\right\rfloor mod\ 2,$$

$k_d$ being used for decrypting the output ciphertext $ct_o$, $pt_o = dec(ct_o, k_d) = (ct_o + k_d) \bmod 2$, wherein the function $P$ and a secret parameter set $t = (t_x, t_y)$ are used to calculate the encryption key $k_e$ and the decryption key $k_d$, the trusted entity (20) or the trusted entity (20) and the computing entity (10) are configured to encrypt the input plaintext $pt_i$ to the input ciphertext $ct_i$ using the encryption key $k_e$,

the trusted entity (20) includes a transmitting entity which is configured to transmit at least a part of the input ciphertext $ct_i$ being encrypted by the trusted entity (20) to the computing entity (10), and

the computing entity (10) includes an inputting entity which is configured to input the input ciphertext $ct_i$ into the transformed function $T$ for calculating the output ciphertext $ct_o$,

wherein the encryption key $k_e$ and the decryption key $k_d$ are used only one time.

**Patentansprüche**

1. Verfahren zum Ausführen eines Kryptographieschemas mit einer Rechenentität (10) und einer vertrauenswürdigen Entität (20), wobei das Verfahren umfasst:

Transformieren (101), an der vertrauenswürdigen Entität (20), einer Funktion P unter Verwendung einer Transformation $P \rightarrow T$ in eine transformierte Funktion $T$, wobei die Funktion $P$ NAND ist, wobei die Funktion P angepasst ist, um einen Ausgabe-Klartext $pt_o = P(pt_i)$ aus einem Eingabe-Klartext $pt_i$ von $n$ Bits, n=2, zu berechnen, wobei die transformierte Funktion $T$ angepasst ist, um einen Ausgabe-Chiffretext

$$ct_o = (ct_{o,x}, ct_{o,y}) = T(ct_i) = T(ct_{i,x}, ct_{i,y}) = \left\lfloor \frac{1}{2}\left(ct_{i,x} + ct_{i,y}\right)\right\rfloor \bmod 2$$

aus einem Eingabe-Chiffretext $ct_i$ zu berechnen, wobei die Transformation $P \rightarrow T$ das Berechnen eines Verschlüsselungsschlüssels $k_e$ mit $k_e = ((k_{e,x,0}, k_{e,x,1}),(k_{e,y,0}, k_{e,y,1})) = ((t_x + ((t_x + t_y) \bmod 2)) \bmod 4, 1 - 2((t_x + t_y) \bmod 2)), ((t_y + ((t_x + t_y) \bmod 2)) \bmod 4, 1 - 2((t_x + t_y) \bmod 2)))$ wobei $k_e$ zum Verschlüsseln des Eingabe-Klartextes $pt_i$, $ct_i = enc(pt_i, k_e) = ((k_{e,x,0} + pt_{i,x} \cdot k_{e,x,1}) \bmod 4, (k_{e,y,0} + pt_{i,y} \cdot k_{e,y,1}) \bmod 4)$ verwendet wird, und das Berechnen eines Entschlüsselungsschlüssels $k_d$ mit $k_d = \left\lfloor \frac{1}{2}\left(k_{e,x,0} + k_{e,x,1} + k_{e,y,0} + k_{e,y,1}\right)\right\rfloor \bmod 2$, umfasst,

wobei $k_d$ zum Entschlüsseln des Ausgabe-Chiffretextes $ct_o$, $pt_o = dec(ct_o, k_d) = (ct_o + k_d) \bmod 2$ verwendet wird, wobei die Funktion $P$ und ein geheimer Parametersatz $t = (t_x, t_y)$ verwendet werden, um den Verschlüsselungsschlüssel $k_e$ und den Entschlüsselungsschlüssel $k_d$ zu berechnen,

Verschlüsseln (102), an der vertrauenswürdigen Entität (20) oder an der vertrauenswürdigen Entität (20) und der Rechenentität (10), des Eingabe-Klartextes $pt_i$ in den Eingabe-Chiffretext $ct_i$ unter Verwendung des Verschlüsselungsschlüssels $k_e$,

Übertragen (103) zumindest eines Teils des von der vertrauenswürdigen Entität (20) verschlüsselten Eingabe-Chiffretextes $ct_i$ von der vertrauenswürdigen Entität (20) zu der Rechenentität (10), und

Eingeben (104) des Eingabe-Chiffretextes $ct_i$ in die transformierte Funktion $T$ an der Rechenentität (10) zum Berechnen des Ausgabe-Chiffretextes $ct_o$,

wobei der Verschlüsselungsschlüssel $k_e$ und der Entschlüsselungsschlüssel $k_d$ nur einmal verwendet werden.

2. Verfahren nach Anspruch 1,
wobei der Eingabe-Klartext $pt_i$ von der vertrauenswürdigen Entität (20) mittels des Verschlüsselungsschlüssels $k_e$ in den Eingabe-Chiffretext $ct_i$ verschlüsselt wird und der Eingabe-Chiffretext $ct_i$ an die Rechenentität (10) übertragen wird und/oder der Ausgabe-Chiffretext $ct_o$ an die vertrauenswürdige Entität (20) übertragen und mittels des Entschlüsselungsschlüssels $k_d$ in den Ausgabe-Klartext $pt_o$ entschlüsselt wird.

3. Verfahren nach einem der Ansprüche 1 bis 2,
wobei Teile des Verschlüsselungsschlüssels $k_e$, der zum Verschlüsseln von Teilen des Klartextes $pt_i$ erzeugt wird, und/oder Teile des Entschlüsselungsschlüssels $k_d$, der zum Entschlüsseln von Teilen des Ausgabe-Chiffretextes $ct_o$ erzeugt wird, an die Rechenentität (10) übertragen werden und Teile des Klartextes $pt_i$ von der Rechenentität mittels der übertragenen Teile des Verschlüsselungsschlüssels $k_e$ verschlüsselt werden und/oder Teile des Aus-

gabe-Chiffretextes $ct_o$ von der Rechenentität (10) mittels der übertragenen Teile des Entschlüsselungsschlüssels $k_d$ in den Ausgabe-Klartext $pt_o$ entschlüsselt werden.

4. Verfahren nach einem der Ansprüche 1 bis 3, wobei zu dem Eingabe-Chiffretext $ct_i$ Redundanz hinzugefügt wird und Operationen der transformierte Funktion $T$ angepasst werden, um den Eingabe-Chiffretext $ct_i$ mit der Redundanz zu verarbeiten.

5. Computerprogramm, umfassend einen Programmcode zum Ausführen des Verfahrens nach einem der Ansprüche 1 bis 4 zum Ausführen eines Kryptographieschemas mit einer Rechenentität (10) und einer vertrauenswürdigen Entität (20), wenn dies auf zumindest einem Computer durchgeführt wird.

6. System zum Ausführen eines Kryptographieschemas mit einer Rechenentität (10) und eine vertrauenswürdige Entität (20), wobei

die vertrauenswürdige Entität (20) eine Transformationsentität umfasst, die eingerichtet ist, um eine Funktion $P$ unter Verwendung einer Transformation $P \rightarrow T$ in eine transformierte Funktion $T$ zu transformieren, wobei die Funktion $P$ NAND ist, wobei die Funktion P angepasst ist, um einen Ausgabe-Klartext $pt_o = P(pt_i)$ aus einem Eingabe-Klartext $pt_i$ von $n$ Bits, n=2, zu berechnen, wobei die transformierte Funktion $T$ angepasst ist, um einen Ausgabe-Chiffretext

$$ct_o = (ct_{o,x}, ct_{o,y}) = T(ct_i) = T(ct_{i,x}, ct_{i,y}) = \left\lfloor \frac{1}{2}(ct_{i,x} + ct_{i,y}) \right\rfloor mod\ 2$$

aus einem Eingabe-Chiffretext $ct_i$ zu berechnen, wobei die Transformation $P \rightarrow T$ das Berechnen eines Verschlüsselungsschlüssels $k_e$,

$$\text{mit } k_e = \left( (k_{e,x,0}, k_{e,x,1}), (k_{e,y,0}, k_{e,y,1}) \right) =$$
$$\left( \left( \left( t_x + \left( (t_x + t_y)\ mod\ 2 \right) \right) mod\ 4, 1 - 2((t_x + t_y)\ mod\ 2) \right),$$
$$\left( \left( t_y + \left( (t_x + t_y)\ mod\ 2 \right) \right) mod\ 4, 1 - 2((t_x + t_y)\ mod\ 2) \right) \right),$$

wobei $k_e$ zum Verschlüsseln des Eingabe-Klartextes $pt_i$, $ct_i = enc(pt_i, k_e) = ((k_{e,x,0} + pt_{i,x} \cdot k_{e,x,1})\ mod\ 4, (k_{e,y,0} + pt_{i,y} \cdot k_{e,y,1})\ mod\ 4)$ verwendet wird, und das Berechnen eines Entschlüsselungsschlüssels $k_d$ mit

$$k_d = \left\lfloor \frac{1}{2}(k_{e,x,0} + k_{e,x,1} + k_{e,y,0} + k_{e,y,1}) \right\rfloor mod\ 2$$, umfasst,

wobei $k_d$ zum Entschlüsseln des Ausgabe-Chiffretextes $ct_o$, $pt_o = dec(ct_o, k_d) = (ct_o + k_d)\ mod\ 2$ verwendet wird, wobei die Funktion P und ein geheimer Parametersatz $t = (t_x, t_y)$ verwendet werden, um den Verschlüsselungsschlüssel $k_e$ und den Entschlüsselungsschlüssel $k_d$ zu berechnen, die vertrauenswürdige Entität (20) oder die vertrauenswürdige Entität (20) und die Rechenentität (10) eingerichtet sind, um den Eingabe-Klartext $pt_i$ unter Verwendung des Verschlüsselungsschlüssels $k_e$ in den Eingabe-Chiffretext $ct_i$ zu verschlüsseln, die vertrauenswürdige Entität (20) eine Übertragungsentität umfasst, die eingerichtet ist, um zumindest einen Teil des von der vertrauenswürdigen Entität (20) verschlüsselten Eingabe-Chiffretextes $ct_i$ an die Rechenentität (10) zu übertragen, und die Rechenentität (10) eine Eingabeentität umfasst, die eingerichtet ist, um den Eingabe-Chiffretext $ct_i$ in die transformierte Funktion $T$ zum Berechnen des Ausgabe-Chiffretextes $ct_o$ einzugeben, wobei der Verschlüsselungsschlüssel $k_e$ und der Entschlüsselungsschlüssel $k_d$ nur einmal verwendet werden.

**Revendications**

1. Procédé pour exécuter un schéma de cryptographie par une entité informatique (10) et par une entité de confiance (20), le procédé comprenant les étapes consistant à :

transformer (101), au niveau de l'entité de confiance (20), une fonction $P$ au moyen d'une transformation $P \rightarrow T$ en une fonction transformée $T$, dans lequel la fonction $P$ est une fonction NON-ET, dans lequel la fonction $P$ est adaptée pour calculer un texte en clair de sortie $pt_o = P(pt_i)$ à partir d'un texte en clair d'entrée $pt_i$ de n bits, n = 2, dans lequel la fonction transformée $T$ est adaptée pour calculer un texte chiffré de sortie

$$ct_o = \left(ct_{o,x}, ct_{o,y}\right) = T(ct_i) = T(ct_{i,x}, ct_{i,y}) = \left\lfloor \frac{1}{2}(ct_{i,x}, + ct_{i,y}) \right\rfloor mod\ 2$$

à partir d'un texte chiffré d'entrée $ct_i$, dans lequel la transformation $P \rightarrow T$ consiste à calculer une clé de chiffrement $k_e$ avec $k_e = ((k_{e,x,0}, k_{e,x,1}), (k_{e,y,0}, k_{e,y,1})) = (((t_x + ((t_x + t_y)mod\ 2))\ mod\ 4,1 - 2\ ((t_x + t_y)mod\ 2)), ((t_y + ((t_x + t_y)mod\ 2))mod\ 4,1 - 2\ ((t_x + t_y)mod\ 2)))$, la clé $k_e$ étant utilisée pour chiffrer le texte en clair d'entrée $pt_i$, $ct_i = enc(pt_i, k_e) = ((ke_{,x,0} + pt_{i,x} \cdot k_{e,x,1})\ mod\ 4, (k_{e,y,0} + pt_{i,y} \cdot k_{e,y,1})mod\ 4)$, et à calculer une clé de déchiffrement $k_d$ avec

$$k_d = \left\lfloor \frac{1}{2}(k_{e,x,0} + k_{e,x,1} + k_{e,y,0} + k_{e,y,1}) \right\rfloor mod\ 2$$

, la clé $k_d$ étant utilisée pour déchiffrer le texte chiffré de sortie $ct_o$, $pt_o = dec(ct_o, k_d) = (ct_o + k_d)\ mod\ 2$, dans lequel la fonction $P$ et un paramètre de secret établi $t = (t_x, t_y)$ sont utilisés pour calculer la clé de chiffrement $k_e$ et la clé de déchiffrement $k_d$,

chiffrer (102), au niveau de l'entité de confiance (20) ou au niveau de l'entité de confiance (20) et de l'entité informatique (10), le texte en clair d'entrée $pt_i$ en le texte chiffré d'entrée $ct_i$ au moyen de la clé de chiffrement $k_e$,

transmettre (103) au moins une partie du texte chiffré d'entrée $ct_i$, qui a été chiffré par l'entité de confiance (20), de l'entité de confiance (20) à l'entité informatique (10), et

entrer (104) le texte chiffré d'entrée $ct_i$ dans la fonction transformée $T$ au niveau de l'entité informatique (10) pour calculer le texte chiffré de sortie $ct_o$,

dans lequel la clé de chiffrement $k_e$ et la clé de déchiffrement $k_d$ ne sont utilisées qu'une seule fois.

2. Procédé selon la revendication 1,
dans lequel le texte en clair d'entrée $pt_i$ est chiffré par l'unité de confiance (20) en le texte chiffré d'entrée $ct_i$ au moyen de la clé de chiffrement $k_e$, et le texte chiffré d'entrée $ct_i$ est transmis à l'entité informatique (10) et/ou le texte chiffré de sortie $ct_o$ est transmis à l'entité de confiance (20) et est déchiffré en le texte en clair de sortie $pt_o$ au moyen de la clé de déchiffrement $k_d$.

3. Procédé selon l'une des revendications 1 et 2,
dans lequel des parties de la clé de chiffrement $k_e$, qui a été générée pour chiffrer des parties du texte en clair $pt_i$, et/ou des parties de la clé de déchiffrement $k_d$, qui a été générée pour déchiffrer des parties du texte chiffré de sortie $ct_o$, sont transmises à l'entité informatique (10) et des parties du texte en clair $pt_i$ sont chiffrées par l'entité informatique (10) au moyen des parties transmises de la clé de chiffrement $k_e$ et/ou des parties du texte chiffré de sortie $ct_o$ sont déchiffrées en le texte en clair de sortie $pt_o$ par l'entité informatique (10) au moyen des parties transmises de la clé de déchiffrement $k_d$.

4. Procédé selon l'une des revendications 1 à 3,
dans lequel une redondance est ajoutée au texte chiffré d'entrée $ct_i$, et des opérations de la fonction transformée $T$ sont adaptées pour traiter le texte chiffré d'entrée $ct_i$ avec la redondance.

5. Programme informatique comprenant un code de programme destiné à exécuter le procédé selon l'une des revendications 1 à 4 pour exécuter un schéma de cryptographie par une entité informatique (10) et par une entité de confiance (20), lorsqu'il est exécuté sur au moins un ordinateur.

6. Système destiné à exécuter un schéma de cryptographie par une entité informatique (10) et par une entité de confiance (20), dans lequel

l'entité de confiance (20) comprend une entité de transformation qui est configurée pour transformer une fonction $P$ au moyen d'une transformation $P \rightarrow T$ en une fonction transformée $T$, dans lequel la fonction $P$ est une fonction NON-ET, dans lequel la fonction $P$ est adaptée pour calculer un texte en clair de sortie $pt_o = P(pt_i)$ à partir d'un texte en clair d'entrée $pt_i$ de n bits, n = 2, dans lequel la fonction transformée $T$ est adaptée pour calculer un texte chiffré de sortie

$$ct_o = \left(ct_{o,x}, ct_{o,y}\right) = T(ct_i) = T(ct_{i,x}, ct_{i,y}) = \left\lfloor \frac{1}{2}\left(ct_{i,x}, + ct_{i,y}\right) \right\rceil \bmod 2$$

à partir d'un texte chiffré d'entrée $ct_i$, dans lequel la transformation $P \rightarrow T$ consiste à calculer une clé de chiffrement $k_e$ avec $k_e = ((k_{e,x,0}, k_{e,x,1}), (k_{e,y,0}, k_{e,y,1})) = (((t_x + ((t_x + t_y) \bmod 2)) \bmod 4, 1 - 2 ((t_x + t_y) \bmod 2)), ((t_y + ((t_x + t_y) \bmod 2)) \bmod 4, 1 - 2 ((t_x + t_y) \bmod 2)))$, la clé $k_e$ étant utilisée pour chiffrer le texte en clair d'entrée $pt_i$, $ct_i = enc(pt_i, k_e) = ((k_{e,x,0} + pt_{i,x} \cdot k_{e,x,1}) \bmod 4, (k_{e,y,0} + pt_{i,y} \cdot k_{e,y,1}) \bmod 4)$, et à calculer une clé de déchiffrement

$$k_d = \left\lfloor \frac{1}{2}(k_{e,x,0} + k_{e,x,1} + k_{e,y,0} + k_{e,y,1}) \right\rceil \bmod 2$$

$k_d$, avec , la clé $k_d$ étant utilisée pour déchiffrer le texte chiffré de sortie $ct_o$, $pt_o = dec(ct_o, k_d) = (ct_o + k_d) \bmod 2$, dans lequel la fonction $P$ et un paramètre de secret établi $t = (t_x, t_y)$ sont utilisés pour calculer la clé de chiffrement $k_e$ et la clé de déchiffrement $k_d$,

l'entité de confiance (20) ou l'entité de confiance (20) et l'entité informatique (10) sont configurées pour chiffrer le texte en clair d'entrée $pt_i$ en le texte chiffré d'entrée $ct_i$ au moyen de la clé de chiffrement $k_e$,

l'entité de confiance (20) comprend une entité de transmission qui est configurée pour transmettre au moins une partie du texte chiffré d'entrée $ct_i$, qui a été chiffré par l'entité de confiance (20), à l'entité informatique (10), et l'entité informatique (10) comprend une entité d'entrée qui est configurée pour entrer le texte chiffré d'entrée $ct$, dans la fonction transformée $T$ pour calculer le texte chiffré de sortie $ct_o$,

dans lequel la clé de chiffrement $k_e$ et la clé de déchiffrement $k_d$ ne sont utilisées qu'une seule fois.

FIG. 1

FIG. 2

$$T((ct_x, ct_y))$$

FIG. 3

| In Fig. 1 | $t'_x$ | $t'_y$ | $k'_{e,x,0}$ | $k'_{e,x,1}$ | $k'_{e,y,0}$ | $k'_{e,y,1}$ | $k'_d$ | $ct'_i$ | $ct'_o$ | $pt'_{i,x}$ | $pt'_{i,y}$ | $pt'_o$ | $NAND(pt'_{i,x}, pt'_{i,y})$ |
|---|---|---|---|---|---|---|---|---|---|---|---|---|---|
| b) | 1 | 1 | 1 | 1 | 1 | 1 | 0 | (1,1) | 1 | 0 | 0 | 1 | 1 |
| d) | 1 | 0 | 2 | -1 | 1 | -1 | 1 | (1,1) | 1 | 0 | 1 | 1 | 1 |
| c) | 0 | 1 | 1 | -1 | 2 | -1 | 0 | (1,1) | 1 | 1 | 0 | 1 | 1 |
| a) | 0 | 0 | 0 | 1 | 0 | 1 | 1 | (1,1) | 1 | 1 | 1 | 0 | 0 |

FIG. 4

FIG. 5

EP 3 637 670 B1

FIG. 6

$f_A$

| 15 | 7 | 0 | 0 | 1 | 1 | 2 | 2 | 3 | 3 | 4 | 4 | 5 | 5 | 6 | 6 | 7 |
|----|---|---|---|---|---|---|---|---|---|---|---|---|---|---|---|---|
| 14 | 7 | 7 | 0 | 0 | 1 | 1 | 2 | 2 | 3 | 3 | 4 | 4 | 5 | 5 | 6 | 6 |
| 13 | 6 | 7 | 7 | 0 | 0 | 1 | 1 | 2 | 2 | 3 | 3 | 4 | 4 | 5 | 5 | 6 |
| 12 | 6 | 6 | 7 | 7 | 0 | 0 | 1 | 1 | 2 | 2 | 3 | 3 | 4 | 4 | 5 | 5 |
| 11 | 5 | 6 | 6 | 7 | 7 | 0 | 0 | 1 | 1 | 2 | 2 | 3 | 3 | 4 | 4 | 5 |
| 10 | 5 | 5 | 6 | 6 | 7 | 7 | 0 | 0 | 1 | 1 | 2 | 2 | 3 | 3 | 4 | 4 |
| 9 | 4 | 5 | 5 | 6 | 6 | 7 | 7 | 0 | 0 | 1 | 1 | 2 | 2 | 3 | 3 | 4 |
| 8 | 4 | 4 | 5 | 5 | 6 | 6 | 7 | 7 | 0 | 0 | 1 | 1 | 2 | 2 | 3 | 3 |
| 7 | 3 | 4 | 4 | 5 | 5 | 6 | 6 | 7 | 7 | 0 | 0 | 1 | 1 | 2 | 2 | 3 |
| 6 | 3 | 3 | 4 | 4 | 5 | 5 | 6 | 6 | 7 | 7 | 0 | 0 | 1 | 1 | 2 | 2 |
| 5 | 2 | 3 | 3 | 4 | 4 | 5 | 5 | 6 | 6 | 7 | 7 | 0 | 0 | 1 | 1 | 2 |
| 4 | 2 | 2 | 3 | 3 | 4 | 4 | 5 | 5 | 6 | 6 | 7 | 7 | 0 | 0 | 1 | 1 |
| 3 | 1 | 2 | 2 | 3 | 3 | 4 | 4 | 5 | 5 | 6 | 6 | 7 | 7 | 0 | 0 | 1 |
| 2 | 1 | 1 | 2 | 2 | 3 | 3 | 4 | 4 | 5 | 5 | 6 | 6 | 7 | 7 | 0 | 0 |
| 1 | 0 | 1 | 1 | 2 | 2 | 3 | 3 | 4 | 4 | 5 | 5 | 6 | 6 | 7 | 7 | 0 |
| 0 | 0 | 0 | 1 | 1 | 2 | 2 | 3 | 3 | 4 | 4 | 5 | 5 | 6 | 6 | 7 | 7 |
|    | 0 | 1 | 2 | 3 | 4 | 5 | 6 | 7 | 8 | 9 | 10 | 11 | 12 | 13 | 14 | 15 |

$h_A$

| 15 | 15 | 0 | 1 | 2 | 3 | 4 | 5 | 6 | 7 | 8 | 9 | 10 | 11 | 12 | 13 | 14 |
|----|----|---|---|---|---|---|---|---|---|---|---|----|----|----|----|----|
| 14 | 14 | 15 | 0 | 1 | 2 | 3 | 4 | 5 | 6 | 7 | 8 | 9 | 10 | 11 | 12 | 13 |
| 13 | 13 | 14 | 15 | 0 | 1 | 2 | 3 | 4 | 5 | 6 | 7 | 8 | 9 | 10 | 11 | 12 |
| 12 | 12 | 13 | 14 | 15 | 0 | 1 | 2 | 3 | 4 | 5 | 6 | 7 | 8 | 9 | 10 | 11 |
| 11 | 11 | 12 | 13 | 14 | 15 | 0 | 1 | 2 | 3 | 4 | 5 | 6 | 7 | 8 | 9 | 10 |
| 10 | 10 | 11 | 12 | 13 | 14 | 15 | 0 | 1 | 2 | 3 | 4 | 5 | 6 | 7 | 8 | 9 |
| 9 | 9 | 10 | 11 | 12 | 13 | 14 | 15 | 0 | 1 | 2 | 3 | 4 | 5 | 6 | 7 | 8 |
| 8 | 8 | 9 | 10 | 11 | 12 | 13 | 14 | 15 | 0 | 1 | 2 | 3 | 4 | 5 | 6 | 7 |
| 7 | 7 | 8 | 9 | 10 | 11 | 12 | 13 | 14 | 15 | 0 | 1 | 2 | 3 | 4 | 5 | 6 |
| 6 | 6 | 7 | 8 | 9 | 10 | 11 | 12 | 13 | 14 | 15 | 0 | 1 | 2 | 3 | 4 | 5 |
| 5 | 5 | 6 | 7 | 8 | 9 | 10 | 11 | 12 | 13 | 14 | 15 | 0 | 1 | 2 | 3 | 4 |
| 4 | 4 | 5 | 6 | 7 | 8 | 9 | 10 | 11 | 12 | 13 | 14 | 15 | 0 | 1 | 2 | 3 |
| 3 | 3 | 4 | 5 | 6 | 7 | 8 | 9 | 10 | 11 | 12 | 13 | 14 | 15 | 0 | 1 | 2 |
| 2 | 2 | 3 | 4 | 5 | 6 | 7 | 8 | 9 | 10 | 11 | 12 | 13 | 14 | 15 | 0 | 1 |
| 1 | 1 | 2 | 3 | 4 | 5 | 6 | 7 | 8 | 9 | 10 | 11 | 12 | 13 | 14 | 15 | 0 |
| 0 | 0 | 1 | 2 | 3 | 4 | 5 | 6 | 7 | 8 | 9 | 10 | 11 | 12 | 13 | 14 | 15 |
|    | 0 | 1 | 2 | 3 | 4 | 5 | 6 | 7 | 8 | 9 | 10 | 11 | 12 | 13 | 14 | 15 |

FIG. 7

$$g_F \quad \text{with } d_{F,y} = 2$$

| | 0 | 1 | 2 | 3 | 4 | 5 | 6 | 7 | 8 | 9 | 10 | 11 | 12 | 13 | 14 | 15 |
|----|---|---|---|---|---|---|---|---|---|---|----|----|----|----|----|----|
| 15 | 0 | 0 | 0 | 0 | 1 | 1 | 1 | 1 | 1 | 1 | 1 | 1 | 0 | 0 | 0 | 0 |
| 14 | 0 | 0 | 0 | 0 | 1 | 1 | 1 | 1 | 1 | 1 | 1 | 1 | 0 | 0 | 0 | 0 |
| 13 | 0 | 0 | 0 | 0 | 0 | 0 | 0 | 0 | 1 | 1 | 1 | 1 | 1 | 1 | 1 | 1 |
| 12 | 0 | 0 | 0 | 0 | 0 | 0 | 0 | 0 | 1 | 1 | 1 | 1 | 1 | 1 | 1 | 1 |
| 11 | 0 | 0 | 0 | 0 | 0 | 0 | 0 | 0 | 1 | 1 | 1 | 1 | 1 | 1 | 1 | 1 |
| 10 | 0 | 0 | 0 | 0 | 0 | 0 | 0 | 0 | 1 | 1 | 1 | 1 | 1 | 1 | 1 | 1 |
| 9 | 1 | 1 | 1 | 1 | 0 | 0 | 0 | 0 | 0 | 0 | 0 | 0 | 1 | 1 | 1 | 1 |
| 8 | 1 | 1 | 1 | 1 | 0 | 0 | 0 | 0 | 0 | 0 | 0 | 0 | 1 | 1 | 1 | 1 |
| 7 | 1 | 1 | 1 | 1 | 0 | 0 | 0 | 0 | 0 | 0 | 0 | 0 | 1 | 1 | 1 | 1 |
| 6 | 1 | 1 | 1 | 1 | 0 | 0 | 0 | 0 | 0 | 0 | 0 | 0 | 1 | 1 | 1 | 1 |
| 5 | 1 | 1 | 1 | 1 | 1 | 1 | 1 | 1 | 0 | 0 | 0 | 0 | 0 | 0 | 0 | 0 |
| 4 | 1 | 1 | 1 | 1 | 1 | 1 | 1 | 1 | 0 | 0 | 0 | 0 | 0 | 0 | 0 | 0 |
| 3 | 1 | 1 | 1 | 1 | 1 | 1 | 1 | 1 | 0 | 0 | 0 | 0 | 0 | 0 | 0 | 0 |
| 2 | 1 | 1 | 1 | 1 | 1 | 1 | 1 | 1 | 0 | 0 | 0 | 0 | 0 | 0 | 0 | 0 |
| 1 | 0 | 0 | 0 | 0 | 1 | 1 | 1 | 1 | 1 | 1 | 1 | 1 | 0 | 0 | 0 | 0 |
| 0 | 0 | 0 | 0 | 0 | 1 | 1 | 1 | 1 | 1 | 1 | 1 | 1 | 0 | 0 | 0 | 0 |

$$h_F \text{ in normal form}$$

| | 0 | 1 | 2 | 3 | 4 | 5 | 6 | 7 | 8 | 9 | 10 | 11 | 12 | 13 | 14 | 15 |
|----|----|----|----|----|----|----|----|----|----|----|----|----|----|----|----|----|
| 15 | 12 | 13 | 14 | 15 | 0 | 1 | 2 | 3 | 4 | 5 | 6 | 7 | 8 | 9 | 10 | 11 |
| 14 | 12 | 13 | 14 | 15 | 0 | 1 | 2 | 3 | 4 | 5 | 6 | 7 | 8 | 9 | 10 | 11 |
| 13 | 12 | 13 | 14 | 15 | 0 | 1 | 2 | 3 | 4 | 5 | 6 | 7 | 8 | 9 | 10 | 11 |
| 12 | 12 | 13 | 14 | 15 | 0 | 1 | 2 | 3 | 4 | 5 | 6 | 7 | 8 | 9 | 10 | 11 |
| 11 | 8 | 9 | 10 | 11 | 12 | 13 | 14 | 15 | 0 | 1 | 2 | 3 | 4 | 5 | 6 | 7 |
| 10 | 8 | 9 | 10 | 11 | 12 | 13 | 14 | 15 | 0 | 1 | 2 | 3 | 4 | 5 | 6 | 7 |
| 9 | 8 | 9 | 10 | 11 | 12 | 13 | 14 | 15 | 0 | 1 | 2 | 3 | 4 | 5 | 6 | 7 |
| 8 | 8 | 9 | 10 | 11 | 12 | 13 | 14 | 15 | 0 | 1 | 2 | 3 | 4 | 5 | 6 | 7 |
| 7 | 4 | 5 | 6 | 7 | 8 | 9 | 10 | 11 | 12 | 13 | 14 | 15 | 0 | 1 | 2 | 3 |
| 6 | 4 | 5 | 6 | 7 | 8 | 9 | 10 | 11 | 12 | 13 | 14 | 15 | 0 | 1 | 2 | 3 |
| 5 | 4 | 5 | 6 | 7 | 8 | 9 | 10 | 11 | 12 | 13 | 14 | 15 | 0 | 1 | 2 | 3 |
| 4 | 4 | 5 | 6 | 7 | 8 | 9 | 10 | 11 | 12 | 13 | 14 | 15 | 0 | 1 | 2 | 3 |
| 3 | 0 | 1 | 2 | 3 | 4 | 5 | 6 | 7 | 8 | 9 | 10 | 11 | 12 | 13 | 14 | 15 |
| 2 | 0 | 1 | 2 | 3 | 4 | 5 | 6 | 7 | 8 | 9 | 10 | 11 | 12 | 13 | 14 | 15 |
| 1 | 0 | 1 | 2 | 3 | 4 | 5 | 6 | 7 | 8 | 9 | 10 | 11 | 12 | 13 | 14 | 15 |
| 0 | 0 | 1 | 2 | 3 | 4 | 5 | 6 | 7 | 8 | 9 | 10 | 11 | 12 | 13 | 14 | 15 |

FIG. 8

$g'_F$

| | 0 | 1 | 2 | 3 | 4 | 5 | 6 | 7 | 8 | 9 | 10 | 11 | 12 | 13 | 14 | 15 |
|---|---|---|---|---|---|---|---|---|---|---|---|---|---|---|---|---|
| 15 | 0 | 0 | 0 | 0 | 0 | 0 | 0 | 0 | 1 | 1 | 1 | 1 | 1 | 1 | 1 | 1 |
| 14 | 0 | 0 | 0 | 0 | 0 | 0 | 0 | 0 | 1 | 1 | 1 | 1 | 1 | 1 | 1 | 1 |
| 13 | 0 | 0 | 0 | 0 | 0 | 0 | 0 | 0 | 1 | 1 | 1 | 1 | 1 | 1 | 1 | 1 |
| 12 | 0 | 0 | 0 | 0 | 0 | 0 | 0 | 0 | 1 | 1 | 1 | 1 | 1 | 1 | 1 | 1 |
| 11 | 1 | 1 | 1 | 1 | 0 | 0 | 0 | 0 | 0 | 0 | 0 | 0 | 1 | 1 | 1 | 1 |
| 10 | 1 | 1 | 1 | 1 | 0 | 0 | 0 | 0 | 0 | 0 | 0 | 0 | 1 | 1 | 1 | 1 |
| 9 | 1 | 1 | 1 | 1 | 0 | 0 | 0 | 0 | 0 | 0 | 0 | 0 | 1 | 1 | 1 | 1 |
| 8 | 1 | 1 | 1 | 1 | 0 | 0 | 0 | 0 | 0 | 0 | 0 | 0 | 1 | 1 | 1 | 1 |
| 7 | 1 | 1 | 1 | 1 | 1 | 1 | 1 | 1 | 0 | 0 | 0 | 0 | 0 | 0 | 0 | 0 |
| 6 | 1 | 1 | 1 | 1 | 1 | 1 | 1 | 1 | 0 | 0 | 0 | 0 | 0 | 0 | 0 | 0 |
| 5 | 1 | 1 | 1 | 1 | 1 | 1 | 1 | 1 | 0 | 0 | 0 | 0 | 0 | 0 | 0 | 0 |
| 4 | 1 | 1 | 1 | 1 | 1 | 1 | 1 | 1 | 0 | 0 | 0 | 0 | 0 | 0 | 0 | 0 |
| 3 | 0 | 0 | 0 | 0 | 1 | 1 | 1 | 1 | 1 | 1 | 1 | 1 | 0 | 0 | 0 | 0 |
| 2 | 0 | 0 | 0 | 0 | 1 | 1 | 1 | 1 | 1 | 1 | 1 | 1 | 0 | 0 | 0 | 0 |
| 1 | 0 | 0 | 0 | 0 | 1 | 1 | 1 | 1 | 1 | 1 | 1 | 1 | 0 | 0 | 0 | 0 |
| 0 | 0 | 0 | 0 | 0 | 1 | 1 | 1 | 1 | 1 | 1 | 1 | 1 | 0 | 0 | 0 | 0 |

$h_F$

| | 0 | 1 | 2 | 3 | 4 | 5 | 6 | 7 | 8 | 9 | 10 | 11 | 12 | 13 | 14 | 15 |
|---|---|---|---|---|---|---|---|---|---|---|---|---|---|---|---|---|
| 15 | 12 | 13 | 14 | 15 | 0 | 1 | 2 | 3 | 4 | 5 | 6 | 7 | 8 | 9 | 10 | 11 |
| 14 | 12 | 13 | 14 | 15 | 0 | 1 | 2 | 3 | 4 | 5 | 6 | 7 | 8 | 9 | 10 | 11 |
| 13 | 12 | 13 | 14 | 15 | 0 | 1 | 2 | 3 | 4 | 5 | 6 | 7 | 8 | 9 | 10 | 11 |
| 12 | 12 | 13 | 14 | 15 | 0 | 1 | 2 | 3 | 4 | 5 | 6 | 7 | 8 | 9 | 10 | 11 |
| 11 | 8 | 9 | 10 | 11 | 12 | 13 | 14 | 15 | 0 | 1 | 2 | 3 | 4 | 5 | 6 | 7 |
| 10 | 8 | 9 | 10 | 11 | 12 | 13 | 14 | 15 | 0 | 1 | 2 | 3 | 4 | 5 | 6 | 7 |
| 9 | 8 | 9 | 10 | 11 | 12 | 13 | 14 | 15 | 0 | 1 | 2 | 3 | 4 | 5 | 6 | 7 |
| 8 | 8 | 9 | 10 | 11 | 12 | 13 | 14 | 15 | 0 | 1 | 2 | 3 | 4 | 5 | 6 | 7 |
| 7 | 4 | 5 | 6 | 7 | 8 | 9 | 10 | 11 | 12 | 13 | 14 | 15 | 0 | 1 | 2 | 3 |
| 6 | 4 | 5 | 6 | 7 | 8 | 9 | 10 | 11 | 12 | 13 | 14 | 15 | 0 | 1 | 2 | 3 |
| 5 | 4 | 5 | 6 | 7 | 8 | 9 | 10 | 11 | 12 | 13 | 14 | 15 | 0 | 1 | 2 | 3 |
| 4 | 4 | 5 | 6 | 7 | 8 | 9 | 10 | 11 | 12 | 13 | 14 | 15 | 0 | 1 | 2 | 3 |
| 3 | 0 | 1 | 2 | 3 | 4 | 5 | 6 | 7 | 8 | 9 | 10 | 11 | 12 | 13 | 14 | 15 |
| 2 | 0 | 1 | 2 | 3 | 4 | 5 | 6 | 7 | 8 | 9 | 10 | 11 | 12 | 13 | 14 | 15 |
| 1 | 0 | 1 | 2 | 3 | 4 | 5 | 6 | 7 | 8 | 9 | 10 | 11 | 12 | 13 | 14 | 15 |
| 0 | 0 | 1 | 2 | 3 | 4 | 5 | 6 | 7 | 8 | 9 | 10 | 11 | 12 | 13 | 14 | 15 |

FIG. 9

$h_E$ with $d'_{E,x} = 2$

| | 0 | 1 | 2 | 3 | 4 | 5 | 6 | 7 | 8 | 9 | 10 | 11 | 12 | 13 | 14 | 15 |
|---|---|---|---|---|---|---|---|---|---|---|---|---|---|---|---|---|
| 15 | 0 | 1 | 2 | 3 | 4 | 5 | 6 | 7 | 8 | 9 | 10 | 11 | 12 | 13 | 14 | 15 |
| 14 | 0 | 1 | 2 | 3 | 4 | 5 | 6 | 7 | 8 | 9 | 10 | 11 | 12 | 13 | 14 | 15 |
| 13 | 14 | 15 | 0 | 1 | 2 | 3 | 4 | 5 | 6 | 7 | 8 | 9 | 10 | 11 | 12 | 13 |
| 12 | 14 | 15 | 0 | 1 | 2 | 3 | 4 | 5 | 6 | 7 | 8 | 9 | 10 | 11 | 12 | 13 |
| 11 | 12 | 13 | 14 | 15 | 0 | 1 | 2 | 3 | 4 | 5 | 6 | 7 | 8 | 9 | 10 | 11 |
| 10 | 12 | 13 | 14 | 15 | 0 | 1 | 2 | 3 | 4 | 5 | 6 | 7 | 8 | 9 | 10 | 11 |
| 9 | 10 | 11 | 12 | 13 | 14 | 15 | 0 | 1 | 2 | 3 | 4 | 5 | 6 | 7 | 8 | 9 |
| 8 | 10 | 11 | 12 | 13 | 14 | 15 | 0 | 1 | 2 | 3 | 4 | 5 | 6 | 7 | 8 | 9 |
| 7 | 8 | 9 | 10 | 11 | 12 | 13 | 14 | 15 | 0 | 1 | 2 | 3 | 4 | 5 | 6 | 7 |
| 6 | 8 | 9 | 10 | 11 | 12 | 13 | 14 | 15 | 0 | 1 | 2 | 3 | 4 | 5 | 6 | 7 |
| 5 | 6 | 7 | 8 | 9 | 10 | 11 | 12 | 13 | 14 | 15 | 0 | 1 | 2 | 3 | 4 | 5 |
| 4 | 6 | 7 | 8 | 9 | 10 | 11 | 12 | 13 | 14 | 15 | 0 | 1 | 2 | 3 | 4 | 5 |
| 3 | 4 | 5 | 6 | 7 | 8 | 9 | 10 | 11 | 12 | 13 | 14 | 15 | 0 | 1 | 2 | 3 |
| 2 | 4 | 5 | 6 | 7 | 8 | 9 | 10 | 11 | 12 | 13 | 14 | 15 | 0 | 1 | 2 | 3 |
| 1 | 2 | 3 | 4 | 5 | 6 | 7 | 8 | 9 | 10 | 11 | 12 | 13 | 14 | 15 | 0 | 1 |
| 0 | 2 | 3 | 4 | 5 | 6 | 7 | 8 | 9 | 10 | 11 | 12 | 13 | 14 | 15 | 0 | 1 |
| | 0 | 1 | 2 | 3 | 4 | 5 | 6 | 7 | 8 | 9 | 10 | 11 | 12 | 13 | 14 | 15 |

$h_E$ with $d'_{E,x} = 2$, $d'_{E,y} = -2$

| | 0 | 1 | 2 | 3 | 4 | 5 | 6 | 7 | 8 | 9 | 10 | 11 | 12 | 13 | 14 | 15 |
|---|---|---|---|---|---|---|---|---|---|---|---|---|---|---|---|---|
| 15 | 14 | 15 | 0 | 1 | 2 | 3 | 4 | 5 | 6 | 7 | 8 | 9 | 10 | 11 | 12 | 13 |
| 14 | 14 | 15 | 0 | 1 | 2 | 3 | 4 | 5 | 6 | 7 | 8 | 9 | 10 | 11 | 12 | 13 |
| 13 | 12 | 13 | 14 | 15 | 0 | 1 | 2 | 3 | 4 | 5 | 6 | 7 | 8 | 9 | 10 | 11 |
| 12 | 12 | 13 | 14 | 15 | 0 | 1 | 2 | 3 | 4 | 5 | 6 | 7 | 8 | 9 | 10 | 11 |
| 11 | 10 | 11 | 12 | 13 | 14 | 15 | 0 | 1 | 2 | 3 | 4 | 5 | 6 | 7 | 8 | 9 |
| 10 | 10 | 11 | 12 | 13 | 14 | 15 | 0 | 1 | 2 | 3 | 4 | 5 | 6 | 7 | 8 | 9 |
| 9 | 8 | 9 | 10 | 11 | 12 | 13 | 14 | 15 | 0 | 1 | 2 | 3 | 4 | 5 | 6 | 7 |
| 8 | 8 | 9 | 10 | 11 | 12 | 13 | 14 | 15 | 0 | 1 | 2 | 3 | 4 | 5 | 6 | 7 |
| 7 | 6 | 7 | 8 | 9 | 10 | 11 | 12 | 13 | 14 | 15 | 0 | 1 | 2 | 3 | 4 | 5 |
| 6 | 6 | 7 | 8 | 9 | 10 | 11 | 12 | 13 | 14 | 15 | 0 | 1 | 2 | 3 | 4 | 5 |
| 5 | 4 | 5 | 6 | 7 | 8 | 9 | 10 | 11 | 12 | 13 | 14 | 15 | 0 | 1 | 2 | 3 |
| 4 | 4 | 5 | 6 | 7 | 8 | 9 | 10 | 11 | 12 | 13 | 14 | 15 | 0 | 1 | 2 | 3 |
| 3 | 2 | 3 | 4 | 5 | 6 | 7 | 8 | 9 | 10 | 11 | 12 | 13 | 14 | 15 | 0 | 1 |
| 2 | 2 | 3 | 4 | 5 | 6 | 7 | 8 | 9 | 10 | 11 | 12 | 13 | 14 | 15 | 0 | 1 |
| 1 | 0 | 1 | 2 | 3 | 4 | 5 | 6 | 7 | 8 | 9 | 10 | 11 | 12 | 13 | 14 | 15 |
| 0 | 0 | 1 | 2 | 3 | 4 | 5 | 6 | 7 | 8 | 9 | 10 | 11 | 12 | 13 | 14 | 15 |
| | 0 | 1 | 2 | 3 | 4 | 5 | 6 | 7 | 8 | 9 | 10 | 11 | 12 | 13 | 14 | 15 |

FIG. 10

| node | jZ | $f_{True}$ | $f_{False}$ | $p_Z$ | $q_Z$ | $d_{Z,y}$ | $d'_{Z,x}$ | $d'_{Z,y}$ | $h_{True}$ | $h_{False}$ | $k_{e,Z}$ | $ct_Z$ | $k_{d,F}$ | dec | $pt_Z$ |
|---|---|---|---|---|---|---|---|---|---|---|---|---|---|---|---|
| A | 3 | 0 | 1 | 1 | 0 | 0 | 0 | 0 | 0..1 | 2..2 | (2,0) | 2 | | 0 | 0 |
| B | 3 | 0 | 1 | 1 | 0 | 0 | 0 | 0 | 0..1 | 2..2 | (2,0) | 2 | | 0 | 0 |
| C | 3 | 0 | 1 | 1 | 0 | 0 | 2 | 0 | 2..3 | 4..4 | (4,2) | 4 | | 0 | 0 |
| D | 2 | 1 | 0 | 1 | 1 | 0 | 0 | 0 | 2..4 | 0..1 | | 4 | | 1 | 1 |
| E | 2 | 1 | 0 | 1 | 1 | 0 | 2 | -2 | 4..6 | 2..3 | | 6 | | 1 | 1 |
| F | 1 | 0 | 1 | 1 | 0 | 2 | 0 | -2 | 0..5 | 6..8 | | 8 | (6,8) | 0 | 0 |

| node | jZ | $f_{True}$ | $f_{False}$ | $p_Z$ | $q_Z$ | $d_{Z,y}$ | $d'_{Z,x}$ | $d'_{Z,y}$ | $h_{True}$ | $h_{False}$ | $k_{e,Z}$ | $ct_Z$ | $k_{d,F}$ | dec | $pt_Z$ |
|---|---|---|---|---|---|---|---|---|---|---|---|---|---|---|---|
| A | 3 | 0 | 1 | 1 | 0 | 0 | 0 | 0 | 0..1 | 2..2 | (2,0) | 2 | | 0 | 0 |
| B | 3 | 1 | 2 | 1 | 0 | 0 | 0 | 0 | 2..3 | 4..4 | (4,2) | 2 | | 0 | 1 |
| C | 3 | 1 | 2 | 1 | 0 | 0 | 2 | 0 | 4..5 | 6..6 | (6,4) | 4 | | 1 | 1 |
| D | 2 | 1 | 0 | 1 | 0 | 0 | 0 | 0 | 4..6 | 2..3 | | 4 | | 1 | 1 |
| E | 2 | 2 | 1 | 1 | 1 | 0 | 2 | -2 | 8..10 | 6..7 | | 6 | | 0 | 0 |
| F | 1 | 1 | 0 | 1 | 1 | 2 | 0 | -2 | 6..11 | 12..14 | | 8 | (12,14) | 1 | 1 |

| node | jZ | $f_{True}$ | $f_{False}$ | $p_Z$ | $q_Z$ | $d_{Z,y}$ | $d'_{Z,x}$ | $d'_{Z,y}$ | $h_{True}$ | $h_{False}$ | $k_{e,Z}$ | $ct_Z$ | $k_{d,F}$ | dec | $pt_Z$ |
|---|---|---|---|---|---|---|---|---|---|---|---|---|---|---|---|
| A | 3 | 1 | 2 | 1 | 0 | 0 | 0 | 0 | 2..3 | 4..4 | (4,2) | 2 | | 1 | 1 |
| B | 3 | 0 | 1 | 1 | 0 | 0 | 0 | 0 | 0..1 | 2..2 | (2,0) | 2 | | 0 | 0 |
| C | 3 | 0 | 1 | 1 | 0 | 0 | 2 | 0 | 2..3 | 4..4 | (4,2) | 4 | | 0 | 0 |
| D | 2 | 1 | 0 | 1 | 0 | 0 | 0 | 0 | 4..6 | 2..3 | | 4 | | 1 | 1 |
| E | 2 | 1 | 0 | 1 | 1 | 0 | 2 | -2 | 4..6 | 2..3 | | 6 | | 1 | 1 |
| F | 1 | 0 | 1 | 1 | 0 | 2 | 0 | -2 | 2..7 | 8..10 | | 8 | (8,10) | 0 | 0 |

| node | jZ | $f_{True}$ | $f_{False}$ | $p_Z$ | $q_Z$ | $d_{Z,y}$ | $d'_{Z,x}$ | $d'_{Z,y}$ | $h_{True}$ | $h_{False}$ | $k_{e,Z}$ | $ct_Z$ | $k_{d,F}$ | dec | $pt_Z$ |
|---|---|---|---|---|---|---|---|---|---|---|---|---|---|---|---|
| A | 3 | 1 | 2 | 1 | 0 | 0 | 0 | 0 | 2..3 | 4..4 | (4,2) | 2 | | 1 | 1 |
| B | 3 | 1 | 2 | 1 | 0 | 0 | 0 | 0 | 2..3 | 4..4 | (4,2) | 2 | | 1 | 1 |
| C | 3 | 1 | 2 | 1 | 0 | 0 | 2 | 0 | 4..5 | 6..6 | (6,4) | 4 | | 1 | 1 |
| D | 2 | 2 | 1 | 1 | 1 | 0 | 0 | 0 | 6..8 | 4..5 | | 4 | | 0 | 0 |
| E | 2 | 2 | 1 | 1 | 1 | 0 | 2 | -2 | 8..10 | 6..7 | | 6 | | 0 | 0 |
| F | 1 | 1 | 0 | 1 | 0 | 2 | 0 | -2 | 8..13 | 14..0 | | 8 | (14,0) | 1 | 1 |

FIG. 11

$g'_F$

| | 0 | 1 | 2 | 3 | 4 | 5 | 6 | 7 | 8 | 9 | 10 | 11 | 12 | 13 | 14 | 15 |
|---|---|---|---|---|---|---|---|---|---|---|---|---|---|---|---|---|
| 15 | 1 | 1 | 0 | 0 | 0 | 0 | 0 | 0 | 0 | 0 | 1 | 1 | 1 | 1 | 1 | 1 |
| 14 | 1 | 1 | 0 | 0 | 0 | 0 | 0 | 0 | 0 | 0 | 1 | 1 | 1 | 1 | 1 | 1 |
| 13 | 1 | 1 | 0 | 0 | 0 | 0 | 0 | 0 | 0 | 0 | 1 | 1 | 1 | 1 | 1 | 1 |
| 12 | 1 | 1 | 0 | 0 | 0 | 0 | 0 | 0 | 0 | 0 | 1 | 1 | 1 | 1 | 1 | 1 |
| 11 | 1 | 1 | 1 | 1 | 1 | 1 | 0 | 0 | 0 | 0 | 0 | 0 | 0 | 0 | 1 | 1 |
| 10 | 1 | 1 | 1 | 1 | 1 | 1 | 0 | 0 | 0 | 0 | 0 | 0 | 0 | 0 | 1 | 1 |
| 9 | 1 | 1 | 1 | 1 | 1 | 1 | 0 | 0 | 0 | 0 | 0 | 0 | 0 | 0 | 1 | 1 |
| 8 | 1 | 1 | 1 | 1 | 1 | 1 | 0 | 0 | 0 | 0 | 0 | 0 | 0 | 0 | 1 | 1 |
| 7 | 0 | 0 | 1 | 1 | 1 | 1 | 1 | 1 | 1 | 1 | 0 | 0 | 0 | 0 | 0 | 0 |
| 6 | 0 | 0 | 1 | 1 | (1) | 1 | 1 | 1 | 1 | 1 | 0 | 0 | 0 | 0 | 0 | 0 |
| 5 | 0 | 0 | 1 | 1 | 1 | 1 | 1 | 1 | 1 | 1 | 0 | 0 | 0 | 0 | 0 | 0 |
| 4 | 0 | 0 | 1 | 1 | 1 | 1 | 1 | 1 | 1 | 1 | 0 | 0 | 0 | 0 | 0 | 0 |
| 3 | 0 | 0 | 0 | 0 | 0 | 0 | 1 | 1 | 1 | 1 | 1 | 1 | 1 | 1 | 0 | 0 |
| 2 | 0 | 0 | 0 | 0 | 0 | 0 | 1 | 1 | 1 | 1 | 1 | 1 | 1 | 1 | 0 | 0 |
| 1 | 0 | 0 | 0 | 0 | 0 | 0 | 1 | 1 | 1 | 1 | 1 | 1 | 1 | 1 | 0 | 0 |
| 0 | 0 | 0 | 0 | 0 | 0 | 0 | 1 | 1 | 1 | 1 | 1 | 1 | 1 | 1 | 0 | 0 |

$pt_i = (0,0,0)$  $h_F$  $pt_o = 0$

| | 0 | 1 | 2 | 3 | 4 | 5 | 6 | 7 | 8 | 9 | 10 | 11 | 12 | 13 | 14 | 15 |
|---|---|---|---|---|---|---|---|---|---|---|---|---|---|---|---|---|
| 15 | 12 | 13 | 14 | 15 | 0 | 1 | 2 | 3 | 4 | 5 | 6 | 7 | 8 | 9 | 10 | 11 |
| 14 | 12 | 13 | 14 | 15 | 0 | 1 | 2 | 3 | 4 | 5 | 6 | 7 | 8 | 9 | 10 | 11 |
| 13 | 12 | 13 | 14 | 15 | 0 | 1 | 2 | 3 | 4 | 5 | 6 | 7 | 8 | 9 | 10 | 11 |
| 12 | 12 | 13 | 14 | 15 | 0 | 1 | 2 | 3 | 4 | 5 | 6 | 7 | 8 | 9 | 10 | 11 |
| 11 | 8 | 9 | 10 | 11 | 12 | 13 | 14 | 15 | 0 | 1 | 2 | 3 | 4 | 5 | 6 | 7 |
| 10 | 8 | 9 | 10 | 11 | 12 | 13 | 14 | 15 | 0 | 1 | 2 | 3 | 4 | 5 | 6 | 7 |
| 9 | 8 | 9 | 10 | 11 | 12 | 13 | 14 | 15 | 0 | 1 | 2 | 3 | 4 | 5 | 6 | 7 |
| 8 | 8 | 9 | 10 | 11 | 12 | 13 | 14 | 15 | 0 | 1 | 2 | 3 | 4 | 5 | 6 | 7 |
| 7 | 4 | 5 | 6 | 7 | 8 | 9 | 10 | 11 | 12 | 13 | 14 | 15 | 0 | 1 | 2 | 3 |
| 6 | 4 | 5 | 6 | 7 | (8) | 9 | 10 | 11 | 12 | 13 | 14 | 15 | 0 | 1 | 2 | 3 |
| 5 | 4 | 5 | 6 | 7 | 8 | 9 | 10 | 11 | 12 | 13 | 14 | 15 | 0 | 1 | 2 | 3 |
| 4 | 4 | 5 | 6 | 7 | 8 | 9 | 10 | 11 | 12 | 13 | 14 | 15 | 0 | 1 | 2 | 3 |
| 3 | 0 | 1 | 2 | 3 | 4 | 5 | 6 | 7 | 8 | 9 | 10 | 11 | 12 | 13 | 14 | 15 |
| 2 | 0 | 1 | 2 | 3 | 4 | 5 | 6 | 7 | 8 | 9 | 10 | 11 | 12 | 13 | 14 | 15 |
| 1 | 0 | 1 | 2 | 3 | 4 | 5 | 6 | 7 | 8 | 9 | 10 | 11 | 12 | 13 | 14 | 15 |
| 0 | 0 | 1 | 2 | 3 | 4 | 5 | 6 | 7 | 8 | 9 | 10 | 11 | 12 | 13 | 14 | 15 |

FIG. 12

$$g'_F$$

| | 0 | 1 | 2 | 3 | 4 | 5 | 6 | 7 | 8 | 9 | 10 | 11 | 12 | 13 | 14 | 15 |
|----|---|---|---|---|---|---|---|---|---|---|----|----|----|----|----|----|
| 15 | 0 | 0 | 0 | 0 | 0 | 0 | 0 | 0 | 1 | 1 | 1 | 1 | 1 | 1 | 1 | 1 |
| 14 | 0 | 0 | 0 | 0 | 0 | 0 | 0 | 0 | 1 | 1 | 1 | 1 | 1 | 1 | 1 | 1 |
| 13 | 0 | 0 | 0 | 0 | 0 | 0 | 0 | 0 | 1 | 1 | 1 | 1 | 1 | 1 | 1 | 1 |
| 12 | 0 | 0 | 0 | 0 | 0 | 0 | 0 | 0 | 1 | 1 | 1 | 1 | 1 | 1 | 1 | 1 |
| 11 | 1 | 1 | 1 | 1 | 0 | 0 | 0 | 0 | 0 | 0 | 0 | 0 | 0 | 1 | 1 | 1 | 1 |
| 10 | 1 | 1 | 1 | 1 | 0 | 0 | 0 | 0 | 0 | 0 | 0 | 0 | 1 | 1 | 1 | 1 |
| 9 | 1 | 1 | 1 | 1 | 0 | 0 | 0 | 0 | 0 | 0 | 0 | 0 | 1 | 1 | 1 | 1 |
| 8 | 1 | 1 | 1 | 1 | 0 | 0 | 0 | 0 | 0 | 0 | 0 | 0 | 1 | 1 | 1 | 1 |
| 7 | 1 | 1 | 1 | 1 | 1 | 1 | 1 | 1 | 0 | 0 | 0 | 0 | 0 | 0 | 0 | 0 |
| 6 | 1 | 1 | 1 | 1 | (1) | 1 | 1 | 1 | 0 | 0 | 0 | 0 | 0 | 0 | 0 | 0 |
| 5 | 1 | 1 | 1 | 1 | 1 | 1 | 1 | 1 | 0 | 0 | 0 | 0 | 0 | 0 | 0 | 0 |
| 4 | 1 | 1 | 1 | 1 | 1 | 1 | 1 | 1 | 0 | 0 | 0 | 0 | 0 | 0 | 0 | 0 |
| 3 | 0 | 0 | 0 | 0 | 1 | 1 | 1 | 1 | 1 | 1 | 1 | 1 | 0 | 0 | 0 | 0 |
| 2 | 0 | 0 | 0 | 0 | 1 | 1 | 1 | 1 | 1 | 1 | 1 | 1 | 0 | 0 | 0 | 0 |
| 1 | 0 | 0 | 0 | 0 | 1 | 1 | 1 | 1 | 1 | 1 | 1 | 1 | 0 | 0 | 0 | 0 |
| 0 | 0 | 0 | 0 | 0 | 1 | 1 | 1 | 1 | 1 | 1 | 1 | 1 | 0 | 0 | 0 | 0 |

$pt_i = (0,1,1)$

$$h_F$$

$pt_o = 1$

| | 0 | 1 | 2 | 3 | 4 | 5 | 6 | 7 | 8 | 9 | 10 | 11 | 12 | 13 | 14 | 15 |
|----|----|----|----|----|----|----|----|----|----|----|----|----|----|----|----|----|
| 15 | 12 | 13 | 14 | 15 | 0 | 1 | 2 | 3 | 4 | 5 | 6 | 7 | 8 | 9 | 10 | 11 |
| 14 | 12 | 13 | 14 | 15 | 0 | 1 | 2 | 3 | 4 | 5 | 6 | 7 | 8 | 9 | 10 | 11 |
| 13 | 12 | 13 | 14 | 15 | 0 | 1 | 2 | 3 | 4 | 5 | 6 | 7 | 8 | 9 | 10 | 11 |
| 12 | 12 | 13 | 14 | 15 | 0 | 1 | 2 | 3 | 4 | 5 | 6 | 7 | 8 | 9 | 10 | 11 |
| 11 | 8 | 9 | 10 | 11 | 12 | 13 | 14 | 15 | 0 | 1 | 2 | 3 | 4 | 5 | 6 | 7 |
| 10 | 8 | 9 | 10 | 11 | 12 | 13 | 14 | 15 | 0 | 1 | 2 | 3 | 4 | 5 | 6 | 7 |
| 9 | 8 | 9 | 10 | 11 | 12 | 13 | 14 | 15 | 0 | 1 | 2 | 3 | 4 | 5 | 6 | 7 |
| 8 | 8 | 9 | 10 | 11 | 12 | 13 | 14 | 15 | 0 | 1 | 2 | 3 | 4 | 5 | 6 | 7 |
| 7 | 4 | 5 | 6 | 7 | 8 | 9 | 10 | 11 | 12 | 13 | 14 | 15 | 0 | 1 | 2 | 3 |
| 6 | 4 | 5 | 6 | 7 | (8) | 9 | 10 | 11 | 12 | 13 | 14 | 15 | 0 | 1 | 2 | 3 |
| 5 | 4 | 5 | 6 | 7 | 8 | 9 | 10 | 11 | 12 | 13 | 14 | 15 | 0 | 1 | 2 | 3 |
| 4 | 4 | 5 | 6 | 7 | 8 | 9 | 10 | 11 | 12 | 13 | 14 | 15 | 0 | 1 | 2 | 3 |
| 3 | 0 | 1 | 2 | 3 | 4 | 5 | 6 | 7 | 8 | 9 | 10 | 11 | 12 | 13 | 14 | 15 |
| 2 | 0 | 1 | 2 | 3 | 4 | 5 | 6 | 7 | 8 | 9 | 10 | 11 | 12 | 13 | 14 | 15 |
| 1 | 0 | 1 | 2 | 3 | 4 | 5 | 6 | 7 | 8 | 9 | 10 | 11 | 12 | 13 | 14 | 15 |
| 0 | 0 | 1 | 2 | 3 | 4 | 5 | 6 | 7 | 8 | 9 | 10 | 11 | 12 | 13 | 14 | 15 |

FIG. 13

$$g'_F$$

| 15 | 1 | 1 | 1 | 1 | 0 | 0 | 0 | 0 | 0 | 0 | 0 | 0 | 1 | 1 | 1 | 1 |
| 14 | 1 | 1 | 1 | 1 | 0 | 0 | 0 | 0 | 0 | 0 | 0 | 0 | 1 | 1 | 1 | 1 |
| 13 | 1 | 1 | 1 | 1 | 0 | 0 | 0 | 0 | 0 | 0 | 0 | 0 | 1 | 1 | 1 | 1 |
| 12 | 1 | 1 | 1 | 1 | 0 | 0 | 0 | 0 | 0 | 0 | 0 | 0 | 1 | 1 | 1 | 1 |
| 11 | 1 | 1 | 1 | 1 | 1 | 1 | 1 | 1 | 0 | 0 | 0 | 0 | 0 | 0 | 0 | 0 |
| 10 | 1 | 1 | 1 | 1 | 1 | 1 | 1 | 1 | 0 | 0 | 0 | 0 | 0 | 0 | 0 | 0 |
| 9 | 1 | 1 | 1 | 1 | 1 | 1 | 1 | 1 | 0 | 0 | 0 | 0 | 0 | 0 | 0 | 0 |
| 8 | 1 | 1 | 1 | 1 | 1 | 1 | 1 | 1 | 0 | 0 | 0 | 0 | 0 | 0 | 0 | 0 |
| 7 | 0 | 0 | 0 | 0 | 1 | 1 | 1 | 1 | 1 | 1 | 1 | 1 | 0 | 0 | 0 | 0 |
| 6 | 0 | 0 | 0 | 0 | (1) | 1 | 1 | 1 | 1 | 1 | 1 | 1 | 0 | 0 | 0 | 0 |
| 5 | 0 | 0 | 0 | 0 | 1 | 1 | 1 | 1 | 1 | 1 | 1 | 1 | 0 | 0 | 0 | 0 |
| 4 | 0 | 0 | 0 | 0 | 1 | 1 | 1 | 1 | 1 | 1 | 1 | 1 | 0 | 0 | 0 | 0 |
| 3 | 0 | 0 | 0 | 0 | 0 | 0 | 0 | 0 | 1 | 1 | 1 | 1 | 1 | 1 | 1 | 1 |
| 2 | 0 | 0 | 0 | 0 | 0 | 0 | 0 | 0 | 1 | 1 | 1 | 1 | 1 | 1 | 1 | 1 |
| 1 | 0 | 0 | 0 | 0 | 0 | 0 | 0 | 0 | 1 | 1 | 1 | 1 | 1 | 1 | 1 | 1 |
| 0 | 0 | 0 | 0 | 0 | 0 | 0 | 0 | 0 | 1 | 1 | 1 | 1 | 1 | 1 | 1 | 1 |
|   | 0 | 1 | 2 | 3 | 4 | 5 | 6 | 7 | 8 | 9 | 10 | 11 | 12 | 13 | 14 | 15 |

$$pt_i = (1,0,0) \qquad h_F \qquad pt_o = 0$$

| 15 | 12 | 13 | 14 | 15 | 0 | 1 | 2 | 3 | 4 | 5 | 6 | 7 | 8 | 9 | 10 | 11 |
| 14 | 12 | 13 | 14 | 15 | 0 | 1 | 2 | 3 | 4 | 5 | 6 | 7 | 8 | 9 | 10 | 11 |
| 13 | 12 | 13 | 14 | 15 | 0 | 1 | 2 | 3 | 4 | 5 | 6 | 7 | 8 | 9 | 10 | 11 |
| 12 | 12 | 13 | 14 | 15 | 0 | 1 | 2 | 3 | 4 | 5 | 6 | 7 | 8 | 9 | 10 | 11 |
| 11 | 8 | 9 | 10 | 11 | 12 | 13 | 14 | 15 | 0 | 1 | 2 | 3 | 4 | 5 | 6 | 7 |
| 10 | 8 | 9 | 10 | 11 | 12 | 13 | 14 | 15 | 0 | 1 | 2 | 3 | 4 | 5 | 6 | 7 |
| 9 | 8 | 9 | 10 | 11 | 12 | 13 | 14 | 15 | 0 | 1 | 2 | 3 | 4 | 5 | 6 | 7 |
| 8 | 8 | 9 | 10 | 11 | 12 | 13 | 14 | 15 | 0 | 1 | 2 | 3 | 4 | 5 | 6 | 7 |
| 7 | 4 | 5 | 6 | 7 | 8 | 9 | 10 | 11 | 12 | 13 | 14 | 15 | 0 | 1 | 2 | 3 |
| 6 | 4 | 5 | 6 | 7 | (8) | 9 | 10 | 11 | 12 | 13 | 14 | 15 | 0 | 1 | 2 | 3 |
| 5 | 4 | 5 | 6 | 7 | 8 | 9 | 10 | 11 | 12 | 13 | 14 | 15 | 0 | 1 | 2 | 3 |
| 4 | 4 | 5 | 6 | 7 | 8 | 9 | 10 | 11 | 12 | 13 | 14 | 15 | 0 | 1 | 2 | 3 |
| 3 | 0 | 1 | 2 | 3 | 4 | 5 | 6 | 7 | 8 | 9 | 10 | 11 | 12 | 13 | 14 | 15 |
| 2 | 0 | 1 | 2 | 3 | 4 | 5 | 6 | 7 | 8 | 9 | 10 | 11 | 12 | 13 | 14 | 15 |
| 1 | 0 | 1 | 2 | 3 | 4 | 5 | 6 | 7 | 8 | 9 | 10 | 11 | 12 | 13 | 14 | 15 |
| 0 | 0 | 1 | 2 | 3 | 4 | 5 | 6 | 7 | 8 | 9 | 10 | 11 | 12 | 13 | 14 | 15 |
|   | 0 | 1 | 2 | 3 | 4 | 5 | 6 | 7 | 8 | 9 | 10 | 11 | 12 | 13 | 14 | 15 |

FIG. 14

$$g'_F$$

|    | 0 | 1 | 2 | 3 | 4 | 5 | 6 | 7 | 8 | 9 | 10 | 11 | 12 | 13 | 14 | 15 |
|----|---|---|---|---|---|---|---|---|---|---|----|----|----|----|----|----|
| 15 | 1 | 1 | 0 | 0 | 0 | 0 | 0 | 0 | 0 | 0 | 1 | 1 | 1 | 1 | 1 | 1 |
| 14 | 1 | 1 | 0 | 0 | 0 | 0 | 0 | 0 | 0 | 0 | 1 | 1 | 1 | 1 | 1 | 1 |
| 13 | 1 | 1 | 0 | 0 | 0 | 0 | 0 | 0 | 0 | 0 | 1 | 1 | 1 | 1 | 1 | 1 |
| 12 | 1 | 1 | 0 | 0 | 0 | 0 | 0 | 0 | 0 | 0 | 1 | 1 | 1 | 1 | 1 | 1 |
| 11 | 1 | 1 | 1 | 1 | 1 | 1 | 0 | 0 | 0 | 0 | 0 | 0 | 0 | 0 | 1 | 1 |
| 10 | 1 | 1 | 1 | 1 | 1 | 1 | 0 | 0 | 0 | 0 | 0 | 0 | 0 | 0 | 1 | 1 |
| 9  | 1 | 1 | 1 | 1 | 1 | 1 | 0 | 0 | 0 | 0 | 0 | 0 | 0 | 0 | 1 | 1 |
| 8  | 1 | 1 | 1 | 1 | 1 | 1 | 0 | 0 | 0 | 0 | 0 | 0 | 0 | 0 | 1 | 1 |
| 7  | 0 | 0 | 1 | 1 | 1 | 1 | 1 | 1 | 1 | 1 | 0 | 0 | 0 | 0 | 0 | 0 |
| 6  | 0 | 0 | 1 | 1 | 1 | 1 | 1 | 1 | 1 | 1 | 0 | 0 | 0 | 0 | 0 | 0 |
| 5  | 0 | 0 | 1 | 1 | 1 | 1 | 1 | 1 | 1 | 1 | 0 | 0 | 0 | 0 | 0 | 0 |
| 4  | 0 | 0 | 1 | 1 | 1 | 1 | 1 | 1 | 1 | 1 | 0 | 0 | 0 | 0 | 0 | 0 |
| 3  | 0 | 0 | 0 | 0 | 0 | 0 | 1 | 1 | 1 | 1 | 1 | 1 | 1 | 1 | 0 | 0 |
| 2  | 0 | 0 | 0 | 0 | 0 | 0 | 1 | 1 | 1 | 1 | 1 | 1 | 1 | 1 | 0 | 0 |
| 1  | 0 | 0 | 0 | 0 | 0 | 0 | 1 | 1 | 1 | 1 | 1 | 1 | 1 | 1 | 0 | 0 |
| 0  | 0 | 0 | 0 | 0 | 0 | 0 | 1 | 1 | 1 | 1 | 1 | 1 | 1 | 1 | 0 | 0 |

$$pt_i = (1,1,1) \qquad h_F \qquad pt_o = 1$$

|    | 0 | 1 | 2 | 3 | 4 | 5 | 6 | 7 | 8 | 9 | 10 | 11 | 12 | 13 | 14 | 15 |
|----|----|----|----|----|----|----|----|----|----|---|----|----|----|----|----|----|
| 15 | 12 | 13 | 14 | 15 | 0 | 1 | 2 | 3 | 4 | 5 | 6 | 7 | 8 | 9 | 10 | 11 |
| 14 | 12 | 13 | 14 | 15 | 0 | 1 | 2 | 3 | 4 | 5 | 6 | 7 | 8 | 9 | 10 | 11 |
| 13 | 12 | 13 | 14 | 15 | 0 | 1 | 2 | 3 | 4 | 5 | 6 | 7 | 8 | 9 | 10 | 11 |
| 12 | 12 | 13 | 14 | 15 | 0 | 1 | 2 | 3 | 4 | 5 | 6 | 7 | 8 | 9 | 10 | 11 |
| 11 | 8 | 9 | 10 | 11 | 12 | 13 | 14 | 15 | 0 | 1 | 2 | 3 | 4 | 5 | 6 | 7 |
| 10 | 8 | 9 | 10 | 11 | 12 | 13 | 14 | 15 | 0 | 1 | 2 | 3 | 4 | 5 | 6 | 7 |
| 9  | 8 | 9 | 10 | 11 | 12 | 13 | 14 | 15 | 0 | 1 | 2 | 3 | 4 | 5 | 6 | 7 |
| 8  | 8 | 9 | 10 | 11 | 12 | 13 | 14 | 15 | 0 | 1 | 2 | 3 | 4 | 5 | 6 | 7 |
| 7  | 4 | 5 | 6 | 7 | 8 | 9 | 10 | 11 | 12 | 13 | 14 | 15 | 0 | 1 | 2 | 3 |
| 6  | 4 | 5 | 6 | 7 | 8 | 9 | 10 | 11 | 12 | 13 | 14 | 15 | 0 | 1 | 2 | 3 |
| 5  | 4 | 5 | 6 | 7 | 8 | 9 | 10 | 11 | 12 | 13 | 14 | 15 | 0 | 1 | 2 | 3 |
| 4  | 4 | 5 | 6 | 7 | 8 | 9 | 10 | 11 | 12 | 13 | 14 | 15 | 0 | 1 | 2 | 3 |
| 3  | 0 | 1 | 2 | 3 | 4 | 5 | 6 | 7 | 8 | 9 | 10 | 11 | 12 | 13 | 14 | 15 |
| 2  | 0 | 1 | 2 | 3 | 4 | 5 | 6 | 7 | 8 | 9 | 10 | 11 | 12 | 13 | 14 | 15 |
| 1  | 0 | 1 | 2 | 3 | 4 | 5 | 6 | 7 | 8 | 9 | 10 | 11 | 12 | 13 | 14 | 15 |
| 0  | 0 | 1 | 2 | 3 | 4 | 5 | 6 | 7 | 8 | 9 | 10 | 11 | 12 | 13 | 14 | 15 |

FIG. 15

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2011110525 A1, GENTRY CRAIG B

- US 8515058 B1, GENTRY CRAIG B

**Non-patent literature cited in the description**

- **FREDERIK ARMKNECHT et al.** *A Guide to Fully Homomorphic Encryption,* 2015, https://eprint.iacr.org/2015/1192.pdf
- **PAULO MARTINS et al.** A Survey on Fully Homomorphic Encryption: An Engineering Perspective. *ACM Computing Surveys,* January 2018, vol. 50 (83

- White-Box Cryptography. **BRECHT WYSEUR.** PhD Thesis. Katholieke Universiteit Leuven, March 2009